# EUROPÄISCHE PATENTSCHRIFT

(11) **EP 0 988 508 B1**
(45) Veröffentlichungstag und Bekanntmachung des Hinweises auf die Patenterteilung: **29.10.2003**
(21) Anmeldenummer: 98932153.4
(22) Anmeldetag: 12.06.1998
(51) Int. Cl.: G01C 21/20, G08G 1/127

(54) **VERFAHREN UND VORRICHTUNG ZUM ERZEUGEN, VERSCHMELZEN UND AKTUALISIEREN VON ZIELFÜHRUNGSDATEN**
METHOD AND DEVICE FOR GENERATING, MERGING AND UPDATING OF DESTINATION TRACKING DATA
PROCEDE ET DISPOSITIF DE GENERATION, FUSION ET MISE A JOUR DE DONNEES DE GUIDANCE DE DESTINATION

(30) Priorität: 12.06.1997 DE 19724919
(43) Veröffentlichungstag der Anmeldung: 29.03.2000
(73) Patentinhaber: Adolph, Michael, 88142 Wasserburg (DE)
(72) Erfinder: Adolph, Michael, 88142 Wasserburg (DE)
(86) Internationale Anmeldenummer: EP9803572
(87) Internationale Veröffentlichungsnummer: WO98057125

(56) Entgegenhaltungen:
- EP-A- 0 090 965
- EP-A- 0 720 137
- WO-A-92/02891
- DE-A- 3 908 702
- DE-C- 19 525 291

## Beschreibung

Die Erfindung betrifft ein Verfahren zum Erzeugen und. Aktualisieren von in einem Zielführungssystem, wenigstens einer mobilen Einheit, nutzbaren Daten gemäß dem Anspruch 1 sowie eine Vorrichtung hierfür gemäß dem Anspruch 38.

Navigations- oder Zielführungssysteme gewinnen in jüngerer Zeit, insbesondere bei ihrer Anwendung in Kraftfahrzeugen, an Bedeutung. Der Zweck solcher Systeme liegt darin, einem Fahrer nach Eingabe eines Ziels mit elektronischen Hilfsmitteln den Weg zum Ziel zu weisen, wodurch einerseits der Weg ohne lästige Rückfragen bei Dritten sicher gefunden werden kann und andererseits Staus oder sonstige Verkehrshindernisse umfahren werden können.

Übliche Navigationssysteme funktionieren derart, daß der momentane Standort eines sich bewegenden Fahrzeuges jeweils fortlaufend ermittelt und mit einem Straßennetz in Form geographischer Daten verglichen wird, die aus einem in dem Fahrzeug mitgeführten Landkartenspeicher, zum Beispiel in Form einer CD-ROM ausgelesen werden. Aus den geographischen Daten und Annahmen über zu erzielende Geschwindigkeiten bestimmt ein Rechner einen günstigen Weg zum Ziel, wobei ggf. zusätzliche Daten berücksichtigt werden, die über Kommunikationssysteme zugespielt werden und streckenspezifische Informationen enthalten, wie beispielsweise Baustellenmeldungen, Unfallmeldungen usw. Das Ergebnis wird mittels eines Displays, beispielsweise in der Form einer Landkarte, bildlich dargestellt, wobei der Standort des Fahrzeuges z.B. durch einen Punkt gekennzeichnet wird. Anhand dieser zusammen mit dem momentanen Ort des Fahrzeuges wiedergegebenen Landkarte kann der Lenker des Fahrzeuges die weitere Fahrtroute bis zum Zielpunkt entnehmen. Ein derartiges System bzw. Verfahren ist beispielsweise aus der DE 35 12 127 A1 bekannt.

Weiterhin ist es aus der DE 38 28 725 A1 bekannt, eine einmal zurückgelegte Fahrtroute individuell von einer in dem jeweiligen Fahrzeug angeordneten Einrichtung aufzuzeichnen, um bei einer neuerlichen Fahrt entlang dieser Fahrtroute die aufgezeichnete. Fahrtroute wieder zur Verfügung zu haben. Hierdurch soll der vorstehend im Zusammenhang mit der DE 35 12 127 A1 beschriebene Aufwand hinsichtlich des Vergleichens des aktuellen Standortes des Fahrzeuges mit abgespeicherten geographischen Daten bei einer für das jeweilige Fahrzeug an sich bekannten Fährtroute vereinfacht werden.

Aus der DE 41 05 180 A1 ist ein autonomes Straßenleitsystem für Kraftfahrzeuge bekannt, das ein Gerät enthält; welches den Verlauf einer tatsächlich abgefahrenen Straße aufnimmt und in einem Speicherchip speichert. Dabei werden Wegstreckenimpulse automatisch aufgenommen, wohingegen Richtungsänderungen von Hand über Drucktasten am Gerät oder über den Fahrtrichtungsanzeiger eines Fahrzeuges eingegeben werden. Der so programmierte Speicherchip kann dem Gerät entnommen und an eine dritte Person übergeben werden, der es dann möglich ist, mit Hilfe des Speicherchips die ihm unbekannte Strecke abzufahren. Ein Problem dieses autonomen Straßenleitsystems liegt u.a. darin; daß jeweils nur ganz spezielle Straßenverläufe gespeichert werden und eine Aktualisierung nicht erfolgt, d.h. Änderungen im Straßenverlauf oder besondere Ereignisse zwischen der Programmierung des Speicherchips und dem Abfahren der Straße durch die dritte Person nicht berücksichtigt werden. Außerdem bestehen Probleme hinsichtlich der "Eichung" der geographischen Daten.

Darüber hinaus ist aus der DE 40 08 460 A1 bekannt, bei der Routenauswahl die aktuelle Verkehrslage dadurch zu berücksichtigen, daß der in einem Fahrzeug angeordneten Zielführungseinrichtung Daten über die Verkehrslage übermittelt werden, wie dies bereits jetzt für Fahrzeuge mit Radioempfängern zum Empfang von Verkehrsfunknachrichten möglich ist.

Aus der DE 43 34 886 A1 ist eine Zielführungseinrichtung für ein Kraftfahrzeug mit einem Bordrechner zur Gewinnung von Signalen für eine fahrtzeit- und/oder verbrauchsoptimale Fahrtstrecke zu einem vorgegebenen Fahrtziel bekannt, die eine Einrichtung enthält, mittels der bei zumindest einer vorangegangenen Lehrbefahrung der Fahrtstrecke Daten für das zeitabhängige Auftreten von Verkehrsbehinderungen aufgenommen werden, die dann in einen Bordrechner eingegeben und bei der Ermittlung einer geänderten Fahrtstrecke berücksichtigt werden. Diese vorbekannte Zielführungseinrichtung hat zwar den Vorteil, daß sie nicht auf fahrzeugexterne Einrichtungen, wie Verkehrsfunk oder Rechner, zur Erfassung von Verkehrsstörungen angewiesen ist; die Daten, die zur Kennzeichnung von Verkehrsbehinderungen eingegeben wurden, sind jedoch nur wenig aktuell. Desweiteren sind die geometrischen Fahrtstreckendaten einer vorprogrammierten CD-ROM entnommen und damit häufig nicht aktuell.

Darüber hinaus ist aus der US 4,350,970 A1 bekannt, die Fahrtzeiten eines Fahrzeuges zwischen zwei gegebenen Punkten zu erfassen, diese so erfaßten Fahrtzeiten an einen als Master-Computer bezeichneten Rechner zu übermitteln, der diese Fahrtzeiten mit Durchschnittswerten vergleicht und bei einer signifikanten Abweichung den nachfolgenden Fahrzeugen eine andere Route unterbreitet. Eine Berücksichtigung dieses Ergebnisses für das übermittelnde Fahrzeug findet nicht statt. Mit anderen Worten, es handelt sich hierbei um ein Verkehrslenkungssystem und nicht um ein Zielführungssystem.

Aus der DE 195 26 148 C2 und DE 195 34 589 A1 gehen weiterhin Verfahren sowie Systeme zur Prognose von Verkehrsströmen hervor, die in ihrer Grundstruktur mit dem Verfahren und System der vorstehend bereits diskutierten DE 35 12 127 A1 übereinstimmen. Im Unterschied hierzu wird bei dem Verfahren bzw. System gemäß der DE 195 26 148 C2 die mittels eines Empfängers für Signale von Navigations-Satelliten-Systemen in einem Fahrzeug einer Stichprobenfahrzeugflotte ständig ermittelte, aktuelle Ortsposition und momentane Fahrzeuggeschwindigkeit nacheinander zusammen in einer Speichereinheit des Fahrzeugs abgelegt. Die gespeicherten Ortspositionen sind Teil von Fahrtroutendaten, die zeit- und/oder wegabhängig von dem Fahrzeug an einen Verkehrsrechner übermittelt werden. Gleichzeitig werden dem Zentralrechner. "aktuelle Fahraktivitätsdaten" von ortsfesten Sensoren übermittelt. Dieser wertet die übermittelten Fahrtrouten- und Fahraktivitätsdaten anhand einer abgespeicherten digitalen Straßenkarte aus und bestimmt die Verkehrsstärken, d.h. die Fahrzeuge pro Zeiteinheit an einem bestimmten Straßenquerschnitt aufgrund dieser Fahrtroutendaten. Anhand der ermittelten Verkehrstärken soll dann gemäß der DE 195 34 589 A1 von dem Zentralrechner die Verkehrsentwicklung prognostizierbar sein, um auf Basis dieser Prognose und der im Zentralrechner abgespeicherten, digitalen Straßenkarte anderen Verkehrsteilnehmern "zeitoptimale" Fahrtrouten vorschlagen zu können. Im Gegensatz zu dem Titel der DE 195 26 148 C2 lassen sich aber mit diesen bekannten Verfahren bzw. Systemen keine Verkehrsströme prognostizieren, da die hierfür wichtigste Information, nämlich der Ausgangspunkt und der Zielpunkt der Fahrzeuge dem Zentralrechner nicht bekannt ist. Darüber hinaus hat das entsprechende lineare Gleichungssystem immer einen Rangabfall aus. problemimmanenten Gründen (die Zahl der Ströme steigt stärker als die Anzahl der physikalisch möglichen Querschnittsmeßstellen), so daß eine Lösungsmanigfaltigkeit vorliegt. Hierdurch kann die Realität beliebig falsch abgebildet werden.

Den vorstehend im Zusammenhang mit der DE 35 12 127 A1, DE 38 28 725 A1, DE 40 08 460 A1, DE 195 26 148 C2 und 195 34 589 A1 diskutierten Systemen bzw. Verfahren ist gemeinsam, daß sie hinsichtlich der geographischen Daten eine statische Datenbasis verwenden. Nur von Zeit zu Zeit wird ein Austausch der geographischen Daten vorgenommen. Werden in den Speicher eines Fahrzeuges die geographischen Daten einer bestimmten Region eingelesen, so sind diese Daten nach wenigen Zeiteinheiten nicht mehr aktuell, da beispielsweise Fahr- bzw. Bewegungswege gesperrt oder neu eröffnet wurden bzw. sich die Fahrtrichtung in einer Einbahnstraße ändern kann. Weiterhin berücksichtigen diese bekannten Systeme bzw. Verfahren nicht die Tatsache, daß ein und dieselbe Fahrtroute zu verschiedenen Tageszeiten, Verkehrslagen, Witterungsbedingungen usw. zu unterschiedlichen Fahrtzeiten führen können. Eine andere, diesen konventionellen Systemen anhaftende Eigenart liegt darin, daß das Ziel durch Eingabe einer Ortsbezeichnung mit Straßennamen und ggf. Hausnummer angesprochen wird. Ist der Zielpunkt in dieser Form dem System nicht bekannt, so scheitert eine Routenberechnung.

Darüber hinaus gehen diese bekannten Verfahren und Systeme von der Hypothese aus, daß ihnen das verfügbare Wegenetz im wesentlichen bekannt sei. Tatsächlich bilden die aber in den entsprechenden Speichern enthaltenen geographischen Daten die Realität nur unvollständig ab, wobei der Grad der Unvollständigkeit von Region zu Region variiert.

Der Aufwand zur Pflege der Informationen zum befahrbaren Wegenetz ist zeitlich und finanziell sehr erheblich. Er ist nicht in allen Teil der Welt mit gleichem Standard durchführbar.

Die Aktualisierung der Daten ist zudem immer nur unvollständig, mit Mängeln behaftet, zeitlich sehr empfindlich verzögert durchführbar und beim Nutzer nur mit erheblicher Zeitverzögerung verfügbar.

Die Tatsache, daß die bekannten Verfahren und Systeme nur Untermengen des tatsächlich verfügbaren Wegenetzes zur Verfügung haben, bedeutet zwingend, daß Routenempfehlungen gegeben werden können, die beträchtliche Umwege (bzgl. Länge und Zeit) zur Folge haben. Dieser Effekt kann bereits für eine einzelne mobile Einheit erheblich sein, wenn ein nur scheinbar unwichtiges Wegstreckenteilstück, insbesondere wenn es in direkter Richtung zum Zielpunkt liegt, dem System nicht bekannt ist.

Der Effekt des Fahrens von Umwegen kann ohne weiteres nennenswerte Ausmaße annehmen, wenn berücksichtigt wird, daß dieser Mangel für alle mobilen Einheiten gilt.

Weiterhin geht aus der DE 195 25 291 C1 die Aktualisierung einer bereits bestehenden, in einem stationären Verkehrsrechner abgespeicherten Straßenkarte hervor.

Die Aktualisierung erfolgt dabei hinsichtlich bestimmter Eigenschaften (Richtungsbefahrbarkeit, zulässige Fahrzeughöhe oder -breite und Fahrzeuggewicht) der in der bereits abgespeicherten Straßenkarte vorhandenen Straßenabschnitte. Hierzu fahren die als Probefahrzeuge in dieser Entgegenhaltung bezeichneten Fahrzeuge die Straßen der gespeicherten Straßenkarte ab und stellen Änderungen in den obengenannten Eigenschaften dieser Straßen fest. Um die Eigenschaftsänderung einer Straße in den im Verkehrsrechner abgespeicherten Straßenkarten einarbeiten zu können, werden während des Abfahrens der Straßen die Fahrtroutendaten des Fahrzeuges erfaßt. Nach Beendigung der Fahrt eines Probefahrzeuges werden die Fahrtroutendaten zusammen mit den erfaßten Eigenschaftsänderungen der Straßenabschnitte mittels eines Funktelefons in anonymisierter Form selbsttätig an den Verkehrsrechner übermittelt. Der Verkehrsrechner sammelt die von verschiedenen Probefahrzeugen übertragenen Fahrtroutendaten und berücksichtigt mittels eines näher erläuterten Verfahrens die von den Probefahrzeugen festgestellten Eigenschäftsänderungen der Straßenabschnitte.

Mit dem in der DE 39 08 702 A1 vorgestellten Verfahren werden die geographischen Koordinatendaten eines sich bewegenden Fahrzeuges ausgewertet und, sofern diese Koordinatendaten um einen vorbestimmten Wert von den Daten einer vorher bereits abgespeicherten Straßenkarte abweichen, aufgezeichnet. Hierdurch können Straßen, die in der abgespeicherten Straßenkarte noch nicht vorhanden sind und über die ein Fahrzeug relativ häufig fährt, auf der im Fahrzeuginneren dargestellten Landkarte angezeigt werden, ohne daß ein neuer Speicherträger (z.B. eine CD-ROM) gekauft werden muß.

Die neu erfaßten Straßendaten werden aber bei diesem bekannten Verfahren nicht mit den bereits auf dem Speicherträger vorhandenen Straßendaten verschmolzen. Dadurch besteht auch keine Möglichkeit, die beispielsweise neu gewonnenen Straßendaten für die Routenplanung zu nutzen.

in der WO 92/02 891 wird ein Verfahren vorgeschlagen, mit dem Karten automatisch erstellt werden sollen. Hierzu fährt ein eigens für diesen Zweck vorgesehenes Fahrzeug die gewünschten Straßenbereiche gezielt ab. Ebenfalls ist in dieser Entgegenhaltung erwähnt, daß eine Aktualisierung bestehender Straßenkarten vorgenommen werden kann. Jedoch ist die weitere Vorgehensweise hierbei nicht erläutert.

Der Erfindung liegt die Aufgabe zugrunde, ein Verfahren zum Erzeugen von in einem praxisgerechten Zielführungssystem nutzbaren Daten zu schaffen, welches sich ständig selbst aktualisiert und dessen Datengenerierung nur geringen Aufwand erfordert. Dabei soll das Verfahren zum Herleiten von Zielführungsdaten aus Daten einsetzbar sein, die nach dem vorgenannten Verfahren erzeugt sind.

Zusätzlich liegt der Erfindung die Aufgabe zugrunde, eine Vorrichtung zum Durchführen der Verfahren anzugeben.

Hinsichtlich der Verfahrens wird die vorstehende Aufgabe durch die Merkmale des Anspruchs 1 gelöst. Vorteilhafte Weiterbildungen des erfindungsgemäßen Verfahrens finden sich in den Unteransprüchen 2 bis 37.

Das erfindungsgemäße Verfahren zeichnet sich dadurch aus, daß in einer mobilen Einheit, beispielsweise einem Fahrzeug, Bewegungsstreckendaten erzeugt werden, mit denen selbsttätig ein digitales Wegenetz generiert wird, das die von der mobilen Einheit zurückgelegten Bewegungs- bzw. Fahrtstrecken abbildet und in einem Speicher ablegt ist. Dieses Wegenetz ist in Form einer Wegstreckendatei abgelegt, die einzelne Wegstreckenabschnitte mit ihren Anfangs- und Endpunkten enthält. Mittels fortlaufender Ergänzung und/oder Aktualisierung der Wegstreckendatei durch für neue Bewegungsstrecken der mobilen Einheit neu generierte Wegstreckendaten wird das Wegenetz den tatsächlichen Verhältnissen nach und nach entsprechen, so daß zu jedem beliebigen Zeitpunkt immer ein aktuelles Wegstreckennetz für die mobile Einheit vorhanden ist.

Für die Bewegungsstreckendaten können neben den geographischen Koordinaten xᵢ, yᵢ der Punkte Pᵢ die Bewegungsrichtung αᵢ der mobilen Einheit für die Wegstreckendaten erfaßt werden. Hierbei kann die Bewegungsrichtung αᵢ aus den geographischen Koordinaten xᵢ, yᵢ, der Punkte Pᵢ der Bewegungsstreckendaten abgeleitet werden oder mittels mindestens einer in der mobilen Einheit vor-. gesehenen Sensoreinheit erfaßt werden.

Damit die in der mobilen Einheit vorgesehene Speichereinrichtung nicht unnötig belastet wird, kann weiterhin vorgesehen sein, daß die Generierung von Bewegungsstreckendaten und/oder Wegstreckendaten in der mobilen. Einheit unterbrochen wird, wenn die generierten Daten bereits in der Speichereinrichtung der mobilen Einheit als bekannt vorhanden sind, und die Generierung der Daten aufgenommen wird, wenn die generierten Daten in der Speichereinrichtung der mobilen Einheit noch nicht vorhanden sind.

Da die in der mobilen Einheit abgespeicherte Wegstreckendatei fortlaufend ergänzt und/oder aktualisiert wird, besteht, sofern eine Datenverarbeitungseinrichtung in der mobilen Einheit vorgesehen ist, bei einer Anforderung zur Ausarbeitung eines Routenvorschlages durch Eingabe eines Zielpunktes und ggf. eines Startpunktes für die mobile Einheit in eine dort vorgesehene Eingabeeinrichtung immer die Möglichkeit, einen aktuellen Routenvorschlag unterbreiten zu können. Ist der Startpunkt bereits bekannt, so braucht er nicht eingegeben zu werden. Die vorgeschlagene Route wird optisch dargestellt und/oder akustisch wiedergegeben.

Durch das Vorsehen von mindestens einem, getrennt von der wenigstens einen mobilen Einheit angeordneten, Zentralrechner gemäß den Merkmalen des Anspruchs 7 besteht die Möglichkeit, die von verschiedenen mobilen Einheiten ermittelten Wegstreckendateien zu mindestens einer Gesamtwegstreckendatei zu verschmelzen, die einen vollständigen Überblick über das benutzbare und genutzte Wegenetz liefert.

Um auch hierbei die beanspruchten Speicherkapazitäten eines Zentralrechners klein zu halten, kann weiterhin vorgesehen sein, daß ein Zentralrechner vor dem Verschmelzen von Wegstreckendateien den Neuigkeitswert einer von einer mobilen Einheit übermittelten Wegstreckendatei bestimmt und diese übermittelte Wegstreckendatei mit der Gesamtwegstreckendatei nur dann verschmilzt, wenn diese Wegstreckendatei zumindest teilweise als neu erkannt worden ist.

Mit den Merkmalen des Anspruchs 9 lassen sich verschiedene Gesamtwegstreckendateien entsprechend den unterschiedlichen Arten von mobilen Einheiten aufbauen, d.h. spezielle Dateien beispielsweise für PKWs, LKWs, Motorräder, PKWs unterschiedlicher Größe oder Motorisierung usw. Ebenfalls können andere Kriterien für den Aufbau unterschiedlicher Gesamtwegstreckendateien herangezogen werden, die beispielsweise an den Benutzer der mobilen Einheit (Alter, Geschlecht usw.) anknüpfen. Diese artspezifischen Dateien erlauben eine nutzerspezifische Ermittlung der jeweils günstigsten Bewegungsstrecke.

Bei dem erfindungsgemäßen Verfahren werden die Daten vollautomatisch erhoben, wobei die Datenermittlung selbstverständlich innerhalb der mobilen Einheit abgeschaltet werden kann. Wenn von einzelnen Verkehrsteilnehmern nicht gewünscht wird, daß die teilnehmerspezifischen Daten einem Zentralrechner überspielt werden, ist es gemäß dem Anspruch 10 z. B. vorteilhaft, für eine bestmögliche Aktualisierung der Daten das Überspielen von Daten an einen Zentralrechner zu vergüten. Dabei kann sich die Vergütung nach dem Neuigkeitswert der Daten richten.

Die Kommunikation zwischen der mobilen Einheit und einem Zentralrechner kann unterschiedlich gestaltet sein. So besteht die Möglichkeit, daß die von der mobilen Einheit aufgezeichneten Daten automatisch am Ende einer Bewegung, das beispielsweise durch Erreichen des Zielpunktes definiert sein kann, auf Anforderung durch einen Zentralrechner, periodisch oder nach einem anderen Kriterium von der mobilen Einheit an einen Zentralrechner übermittelt werden. Für eine ggf. vorhandene Kommunikation zwischen einem Zentralrechner und einer mobilen Einheit besteht ebenfalls die Möglichkeit, daß dies automatisch nach einer vorbestimmten Zeitperiode, auf Anforderung durch die mobile Einheit, entsprechend einem Neuigkeitswert der zu übermittelnden Daten usw. geschieht.

Neben einer in einer mobilen Einheit vorgesehenen Datenverarbeitungseinrichtung kann auch ein Zentralrechner bei Anforderung seitens einer mobilen Einheit durch Mitteilung eines Start- und Zielpunktes für diese mobile Einheit einen Routenvorschlag anhand der wenigstens einen bereits in einem Zentralrechner abgespeicherten Gesamtwegstreckendatei erstellen und der mobilen Einheit übermitteln.

Häufig enthält die bereits existierende Wegstreckendatei und/oder Gesamtwegstreckendatei noch nicht den gewünschten Start- und/oder Zielpunkt einer mobilen Einheit. In diesem Fall ist es vorteilhaft, wenn die in der mobilen Einheit vorgesehene Datenverarbeitungseinrichtung oder ein Zentralrechner den nächstliegenden, bekannten Start- und/oder Zielpunkt aus der in den mobilen Einheit abgespeicherten Wegstreckendatei oder der wenigstens einen in einem Zentralrechner abgespeicherten Gesamtwegstreckendatei für den Routenvorschlag verwendet.

Bei den bekannten Zielführungssystemen bzw. -verfahren wird der Zielpunkt in aller Regel durch Angabe des Ortes, des Straßennamens und ggf. einer Hausnummer ermittelt. Wird dagegen der Zielpunkt im Wege von geographischen Koordinaten eingegeben, so besteht die Möglichkeit, wie dies bereits vorstehend angesprochen worden ist, daß eine in der mobilen Einheit ggf. vorgesehene Datenverarbeitungseinrichtung selbst oder ein Zentralrechner anhand der ihnen bekannten Koordinaten und den dazugehörigen Straßen bzw. Hausnummern die mobile Einheit in unmittelbarer Nähe zu dem unbekannten Zielpunkt führen können. Hierbei kann jedes beliebige (geophysikalische) Koordinatensystem Verwendung finden.

Da die Eingabe von Koordinaten für den durchschnittlichen Benutzer eines derartigen Navigationssystems bzw. Navigationsverfahrens schwierig ist, kann daher zur Erleichterung weiterhin vorgesehen sein, daß die Eingabeeinrichtung ein Barcodeleser ist, mittels dem die Koordinaten eingelesen werden können. Ebenfalls ist eine Spracheingäbe möglich.

In diesem Zusammenhang ist zu bemerken, daß der Zielpunkt nicht allein durch seinen geographischen Ort, sondern auch durch eine Eigenschaft definiert sein kann. Hierdurch können beispielsweise auch Supermärkte, Ausstellungen, Freizeitparks usw. durch das erfindungsgemäße Verfahren aufgefunden werden. Weiterhin kann beispielsweise auf einem Messegelände ein bestimmter Ausstellungsstand gefunden werden. Es versteht sich, daß die Zieldaten auch mit zusätzlichen Daten aus anderen Informationssystemen verschmolzen werden können, z.B. Daten, die über das Ziel informieren, wie Hoteldaten, Fahrpläne, Geschwindigkeitsbegrenzungen usw.

Eine weitere Maßnahme zur Reduzierung der beanspruchten Speicherkapazitäten in der mobilen Einheit oder einem Zentralrechner kann gemäß Anspruch 20 darin bestehen, daß die Generierung der Bewegungsstreckendaten durch die mobile Einheit aufgenommen wird, wenn sich die mobile Einheit auf einer von einem Zentralrechner oder von der in der mobilen Einheit vorgesehenen Datenverarbeitungseinrichtung nicht vorgeschlagenen Route bewegt. Des weiteren kann vorgesehen sein, daß die Generierung der Bewegungsstreckendaten unterbrochen wird, wenn die Bewegung unterbrochen wird.

Neben der vorstehend erläuterten Erfassung der geographischen Koordinaten xᵢ, yᵢ der Punkte Pᵢ der Bewegungsstreckendaten können auch die Zeitpunkte Tᵢ ihres Erreichens erfaßt und in der Speichereinrichtung der mobilen Einheit gespeichert werden. Weiterhin kann vorgesehen sein, daß den Wegstreckenabschnitten PⱼPₖ der Wegstreckendaten außerdem die Absolutzeiten Tⱼₖ der Bewegung zugeordnet werden. Weiterhin können den Wegstreckenabschnitten PⱼPₖ der Wegstreckendaten die benötigten Bewegungszeitdauern tⱼₖ zugeordnet werden. Hierdurch werden die für die einzelnen Wegstreckenabschnitte realisierten Bewegungszeitdauern berücksichtigt, die dann Eingang in die Routenplanung finden können. Diese Vorgehensweise ist gegenüber der im Stand der Technik bekannten Zuordnung der auf einem Wegstreckenabschnitt erzielten mittleren Geschwindigkeit eines Fahrzeugstromes oder ausgehend von der momentanen Geschwindigkeit eines Stichprobenfahrzeuges überlegen, da Geschwindigkeiten die Erstellung eines Routenvorschlages unter dem Gesichtspunkt der kürzesten Fahrtzeit nicht zulassen, weder mikroskopisch (eine mobile Einheit) noch makroskopisch (mehrere oder alle mobilen Einheiten). Gemessene Geschwindigkeiten (als Quotienten aus Weg und Zeit) lassen nicht grundsätzlich auf die für eine Wegstrecke benötigte Zeitdauer schließen (infolge der sich dauernd ändernden Geschwindigkeit).

Durch die vorstehend erwähnten zusätzlichen Daten läßt sich, wie dies nachstehend noch erläutert wird, eine Wegstreckendatei und/oder eine Gesamtwegstreckendatei aufbauen, die das Bewegungsmuster zu unterschiedlichen Zeiten auf gleichen Wegstreckenabschnitten berücksichtigt. Auch läßt sich zum Zwecke der Datenverdichtung und der Erzeugung möglichst aussagekräftiger Daten die Wegstreckendaten anhand der Zeitpunkte Tᵢ für solche Kalenderzeiten zusammenfassen, die ein gleiches, typisches Bewegungsmuster bzw. Verkehrsgeschehen aufweisen. Dies kann dann bei der Routenplanung berücksichtigt werden.

Es hat sich weiterhin als vorteilhaft erwiesen, wenn in der Wegstreckendatei geographisch gleiche Wegstreckenabschnitte verschiedener Bewegungen der mobilen Einheit für vorbestimmte Zeitabschnitte der Bewegungszeitdauer tⱼₖ zusammengefaßt werden, wodurch beispielsweise für eine bestimmte Uhrzeit an einem ersten Montag eines bestimmten Monats die Bewegungszeitdauern tⱼₖ eines bestimmten Wegstreckenabschnittes abgerufen werden können. Hierbei können Mittelwerte aus den Bewegungszeitdauern tⱼₖ gebildet werden.

Mit den Merkmalen des Anspruchs 28 wird erreicht, daß für jede Wegstrecke eine Aussage möglich ist, wie bei einem typischen Bewegungsmuster realisierbare Bewegungszeitdauern schwanken, vorausgesetzt, es liegen keine besonderen, seltenen Ereignisse vor, wie Unfälle, Überflutungen, Baustellen usw.

Um die reine Bewegungszeitdauer tⱼₖ erfassen können, kann es von Vorteil sein, wenn eine Stillstandsdauer der mobilen Einheit bei der Ermittlung der Bewegungszeitdauer tⱼₖ unterdrückt wird.

Der Anspruch 30 gibt ein Beispiel für sich wiederholende Kalenderzeiten wieder, zu denen ähnliche Verkehrsverhältnisse auftreten. Generell kann festgestellt werden, daß das Verkehrsgeschehen periodisch schwankt, so daß es bezüglich des Verkehrsgeschehens gleiche Kalenderzeiten gibt, z.B. Montagmorgen, Freitagnachmittag, Ferienbeginn usw. Mit den Merkmalen des Anspruchs 31 wird der Vorteil erzielt, daß neben den über lange Zeiten gesammelten und statistisch ausgewerteten Wegstreckenabschnittsdaten in einer Kurzzeitwegstreckendatei nur die jeweils aktuellsten Wegstreckenabschnittsdaten gespeichert sind, so daß erkennbar ist, ob gerade ein seltenes Ereignis vorliegt, beispielsweise eine ein besonders langsames Fahren erfordernde Baustelle oder ein Unfall oder der jeweilige Wegstreckenabschnitt Teil einer Einbahnstraße ist usw.

Die Punkte PⱼPₖ einer Wegstrecke Pⱼ, Pₖ können ganz unterschiedlich festgelegt werden. So können sie beispielsweise entsprechend dem Auftreten von Richtungswechseln festgelegt werden oder in den Schnittpunkten von Wegstrecken unterschiedlicher Richtung liegen.

Um ggf. weitere Informationen über beispielsweise Tankstellen für Kraftfahrzeuge als mobile Einheiten erhalten zu können, kann weiter vorgesehen sein, daß zusätzliche Daten in den Wegstreckenabschnittsdaten gespeichert werden, wie Stillstandszeiten der mobilen Einheit usw.

Der Anspruch 36 kennzeichnet die grundsätzliche Durchführung des Verfahrens zur Lösung des zweiten Teils der Erfindungsaufgabe. Aus der Wegstreckendatei, in der sich das gesamte Verkehrsgeschehen abbildet, kann z.B. ein Weg von einem vorgegebenen Startpunkt zu einem vorgegebenen Zielpunkt unter Minimierung der Bewegungszeitdauer oder der Länge des Weges zuverlässig und mit hoher Aktualität errechnet werden.

Mit den Merkmalen des Anspruchs 37 wird die Präzision des Verfahrens zum Erzeugen von Zielführungsdaten weiter verbessert werden.

Der in den Ansprüchen 36 und 37 angesprochene Rechner kann sowohl eine Datenverarbeitungseinrichtung in der mobilen Einheit als auch ein Zentralrechner sein.

Die vorstehende Aufgabe zum Erzeugen von in einem Zielführungssystem nutzbaren Daten wird hinsichtlich der Vorrichtung bzw. das System durch die Merkmale des Anspruchs 38 gelöst. In den Ansprüchen 39 bis 52 sind vorteilhafte Ausgestaltungen der erfindungsgemäßen Vorrichtung wiedergegeben. Im Zusammenhang mit der erfindungsgemäßen Vorrichtung finden sich die gleichen Vorteile, wie sie vorstehend bei dem Verfahren gemäß der Erfindung erläutert worden sind.

Um die Adresseninformation nicht durch umständliche Manipulationen am Eingabegerät eingeben zu müssen, kann bei der erfindungsgemäßen Vorrichtung vorgesehen sein, daß die Eingabeeinheit eine Einrichtung zum Einlesen von auf einem Datenträger befindlichen Adresseninformationen ist. Dieser Datenträger kann beispielsweise eine die Adresseninformationen enthaltende Visitenkarte sein. Ebenfalls kann die Einrichtung eine Strichcodeleseeinrichtung oder eine Spracheingabeeinrichtung sein.

Es ist zu bemerken, daß der Begriff "mobile Einheit" dahingehend zu verstehen ist, daß hierdurch nicht nur Fahrzeuge sondern beispielsweise auch Fußgänger die mit einem tragbaren Navigationssystem gemäß der Erfindung ausgestattet sind, erfaßt sind. Ein derartiges System ist beispielsweise dann von Vorteil, wenn in einer Großstadt keine Bezeichnung der Straßen vorhanden sind oder aber die Bezeichnungen in für den Benutzer des Systems nicht entzifferbaren Zeichen erfolgt.

Handelt es sich bei der mobilen Einheit um eine motorbetriebene mobile Einheit wie beispielsweise ein Kraftfahrzeug, so können zur Verbesserung der Auswertung der erfaßten Grunddaten in der Aufzeichnungseinrichtung auch Mittel zum Erfassen der Motordrehzahl bzw. des Füllzustandes einer in der mobilen Einheit angeordneten Speichervorrichtung für die zum Antrieb des Motors notwendigen Energie, insbesondere des Tankes, zum Erfassen der Temperatur und/oder Feuchtigkeit usw. vorgesehen sein. Hierdurch läßt sich die Genauigkeit der ausgewerteten Daten noch verbessern, da beispielsweise anhand der Motordrehzahl festgestellt werden kann, daß das Fahrzeug an verhältnismäßig vielen Ampeln zu halten hatte, und weil durch den Füllzustand des Tankes festgestellt werden kann, wo sich eine Tankstelle befindet (da der Zustand zwischen leerem Tank und vollem Tank erfaßt wird).

Als Mittel zum Erfassen der Bewegungsrichtung der mobilen Einheit kann ein Gyrometer oder ein Kompaß vorgesehen sein. Weiterhin kann das Mittel zum Erfassen der jeweiligen absoluten Position einen GPS-Empfänger aufweisen.

Um die Datenmengen zu verringern, die eine Zentraleinheit zur Erfüllung Ihrer Aufgabe zu verwalten hat, kann es weiterhin von Vorteil sein, wenn anstelle eines einzigen stationären Zentralrechners mehrere regional bezogene, stationäre Zentralrechner vorgesehen sind, die untereinander vernetzt sind.

Zusammenfassend kann also festgehalten werden, daß aus der Gesamtwegstreckendatei nach Eingabe von Startpunkt, Zielpunkt und beabsichtigter Fahrtzeit Zielführungsdaten errechnet werden können. Da alle Quell-Zielbeziehungen des Verkehrs bzw. der durch die mobilen Einheiten ausgeführten Bewegungen in Abhängigkeit von allen denkbaren Parametern bekannt sind, lassen sich die Zielführungsempfehlungen für die Verkehrsteilnehmer derart geben, daß die Summe der Bewegungszeiten aller Teilnehmer minimal wird.

Weitere vorteilhafte Ausgestaltungen sowie ein Ausführungsbeispiel werden nachstehend anhand der Zeichnungsfiguren erläutert. Hierbei ist:
- Figur 1: ein an Bord eines Fahrzeuges als mobile Einheit vorhandenes System gemäß der Erfindung;
- Figur 2: ein mit dem System gemäß Figur 1 kommunizierender Rechner;
- Figuren 3 bis 10: Darstellungen einer Streckengeometrie zum Erläutern der Betriebsweise des erfindungsgemäßen Zielführungssystems bzw. -verfahrens.

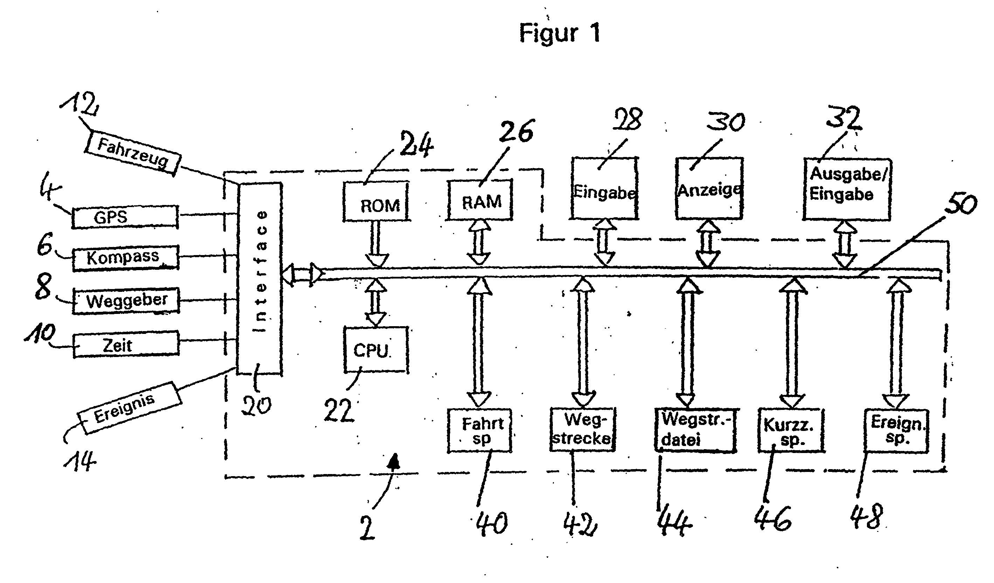

In Figur 1 ist das erfindungsgemäße Zielführungssystem mit seinen beiden wesentlichen Baugruppen wiedergegeben. Das Zielführungssystem sei in einem Fahrzeug als mobile Einheit eingebaut. In Figur 1 sind die Eingänge eines insgesamt mit 2 bezeichneten elektronischen Steuergerätes bzw. einer Elektronikeinheit mit den nachstehend angeführten Sensoren bzw. Signalgebern verbunden.

Ein mit Satellitennavigation arbeitender GPS (geographical positioning system) Empfänger 4 erzeugt Daten, die die geographische Position des Steuergerätes 2 der mobilen Einheit beispielsweise nach geographischer Länge und geographischer Breite angeben. Optional kann zusätzlich die Höhe angegeben werden.

Ein Kompaß 6, der beispielsweise zwei Kreuzspulen enthält, die das erdmagnetische Feld abtasten und hinsichtlich der durch das Steuergerät 2 bzw. fahrzeugbedingten Mißweisungen kompensiert ist, erzeugt ein Signal α, das der Richtung entspricht, die die mobile Einheit bzw. das Fahrzeug relativ zur magnetischen Nordrichtung hat. Der Kompaß 6 kann durch ein Gyroskop ersetzt oder ergänzt sein, das wegen seiner Kreiselstabilisierung genauere Richtungswerte liefert.

Weiterhin erzeugt ein Weggeber 8 einen Impuls je zurückgelegter Streckeneinheit. Der Weggeber 8 tastet beispielsweise die Umdrehung eines Fahrzeugrades ab. Darüber hinaus erzeugt ein Zeitgeber 10 ein der Absolutzeit entsprechendes Zeitsignal.

Zusätzlich vorgesehen ist ein Fahrzeugsignalgeber 12, der ein die Fahrzeugart kennzeichnendes Signal erzeugt und beim Einbau des Steuergerätes 2 fahrzeugfest programmiert wird. Ein Ereignisgeber 14 erzeugt beim Öffnen und/oder Schließen einer Tür, beim Tanken (Öffnen der Tankklappe, Änderung des Tankfüllstandes), bei einer Fahrzeugwartung (Rücksetzen eines Wartungsintervallüberwachungsgerätes), bei Regen (dauerhafte Wischerbetätigung), bei Frost (niedere Außentemperatur) usw. ein das jeweilige Ereignis kennzeichnendes Signal. Es versteht sich, daß weitere Signalgeber vorhanden sein können, die beispielsweise schönes Wetter (Sonnenschein), die Last, unter der der Motor läuft, das Fahrzeuggewicht, die Achslast usw. erfassen. Insbesondere durch die Ermittlung der Daten hinsichtlich der Achslast kann auf sehr einfache aber überaus wirkungsvolle Weise die Beanspruchung des Fahrbahnbelages an einem Straßenquerschnitt berechnet werden, in dem die Achslastübergänge bzw. die normierten Achslastübergänge summiert werden. Durch Auswertung der in einem Zentralrechner vorhandenen Daten kann dann beispielsweise der Zeitpunkt bestimmt werden, bei dem der Oberflächen-Straßenbelag wieder erneuert werden muß.

Das Steuergerät 2 enthält darüber hinaus ein Interface 20, welches die Ausgangssignale der Geräte 4 bis 14 in digitale Signale zur Verarbeitung innerhalb des Steuergerätes 2 umsetzt, einen Mikroprozessor 22, der verschiedenste Datenverarbeitungsvorgänge ausführt, einen ROM-Speicher 24, in welchem u.a. die Arbeitsprogramme für den Mikroprozessor 22 abgelegt sind, und einen RAM-Speicher 26 mit direktem Zugriff, in welchen die zum Ausführen der Programme notwendigen Informationen und aktuellen Daten eingeschrieben und von dem diese Informationen und Daten ausgelesen werden.

Zur Eingabe von Daten in das Steuergerät 2 ist eine Eingabeeinheit 28 vorgesehen; zur Ausgabe bzw. Anzeige, die akustisch und/oder optisch erfolgen kann, dient eine Anzeigeeinheit 30. Damit Daten vom Steuergerät 2 an einen getrennt von der mobilen Einheit bzw. dem Fahrzeug angeordneten Zentralrechner übergeben werden können und Daten vom Zentralrechner geladen bzw. übernommen werden können, ist eine Datenausgabe-/Eingabeeinheit 32 vorgesehen. Diese Datenausgabe/Eingabeeinheit 32 kann Daten unmittelbar oder über Modem senden oder empfangen. Sie kann auch einen transportierbaren Datenträger enthalten, mittels dessen die Daten an anderer Stelle, beispielsweise mittels eines Personalcomputers (PC) aus- und einlesbar sind. Das Einlesen und Auslesen von Daten kann auch über Ultraschall, mit Hilfe von Infrarot oder sonstwie berührungslos mittels ortsfesten Sensoreinrichtungen erfolgen, die mit fahrzeugfesten Sensoren, beispielsweise in Parkhäusern, an Tankstellen usw. kommunizieren.

Zum Speichern von Daten, die aus den von den Geräten 4 bis 14 erzeugten Signalen errechnet werden, dient ein Fahrtspeicher 40, ein Wegstreckenspeicher 42, ein Wegstreckendateispeicher 44, ein Kurzzeitspeicher 46 und ein Ereignisspeicher 48. Die Funktion und die Inhalte der genannten Speicher werden weiter unten erläutert.

Der Aufbau der genannten Geräte, die über ein Datenbussystem 50 verbunden sind, ist an sich bekannt und wird daher nicht erläutert.

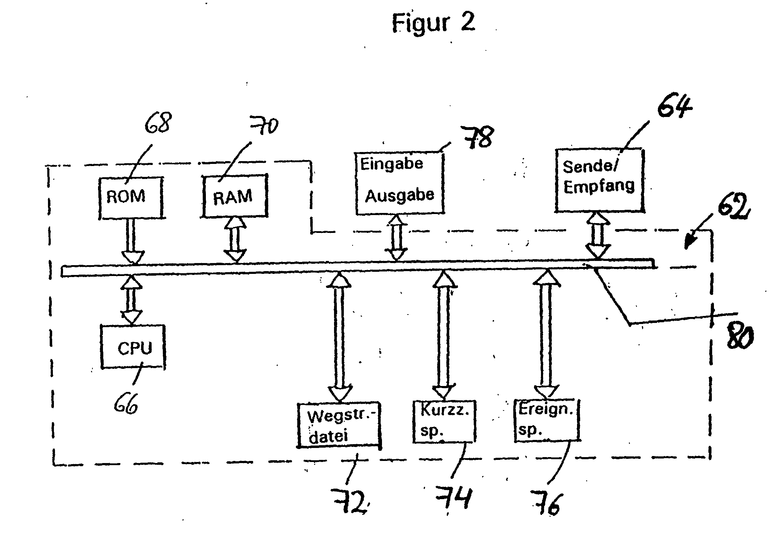

In Figur 2 ist ein Blockschaltbild eines Zentralrechners 62 wiedergeben, der hinsichtlich zahlreicher Bausteine dem Steuergerät 2 entspricht und mit diesem über eine Sende-/Empfangseinheit 64 direkt oder indirekt kommuniziert. Im Gesamtsystem können mehrere Zentralrechner vorgesehen sein, die unterschiedliche Aufgaben ausführen und miteinander kommunizieren.

Der Zentralrechner 62 enthält einen Mikroprozessor 66 mit ROM 68 und RAM 70, einen Gesamtwegstreckendateispeicher 72, einen Kurzzeitspeicher 74 und einen Ereignisspeicher 76. Für Ein-/Ausgaben in den bzw. aus dem Zentralrechner 62 ist eine Eingabe-/Ausgabeeinheit 78 vorgesehen. Alle genannten Bausteine, die in ihrem Aufbau an sich bekannt sind, sind über ein Datenbussystem 80 miteinander verbunden.

Im Folgenden wird ein typischer Betriebsablauf der beschriebenen Geräte geschildert:

Bei Inbetriebsetzen eines Fahrzeugs als mobile Einheit, das mit dem System gemäß Figur 1 ausgerüstet ist, wobei das System über die Eingabeeinheit 28 aktiviert werden kann, sendet der GPS-Empfänger 4 ein Signal, das dem Standort des Fahrzeugs entspricht, wobei der Kompaß 6 ein Richtungssignal α und der Zeitgeber 10 ein Zeitsignal t sendet. Diese drei Signale werden im Fahrtspeicher 40 zu einem ersten Fahrtstreckendatum Pᵢ vereint, das die geographischen Koordinaten xᵢ, yᵢ des Ausgangspunktes Pᵢ und die Absolutzeit Tᵢ enthält. Nach einer vorgegebenen Routine, beispielsweise nach Ablauf einer bestimmten, vom Zeitgeber 10 gegebenen Zeitdauer oder nach Zurücklegen einer bestimmten vom Weggeber 8 gegebenen Wegstrecke, werden die Folgepunkte Pᵢ₊₁, ..., Pᵢ₊ₙ der Fahrtstrecke in gleicher Weise abgespeichert, wobei die Ortskoordinaten x und y durch Vergleich mit den aufgrund des Richtungssignals α und des Zeitsignals t errechneten Folgepunkten jeweils auf Plausibilität geprüft und bei Abweichungen gemittelt werden. Die zurückgelegte Fahrtstrecke wird somit punktweise aufgezeichnet, wobei den Daten ein für das Fahrzeug typisches Datum aus dem Fahrzeugartsignalgeber 12 beigestellt werden kann, das beispielsweise die Fahrzeugmarke, den Fahrzeugtyp, die Motorisierung oder ähnliches angibt. Wenn der Ereignisgeber 14 ein Signal erzeugt, beispielsweise ein Tanksignal, so wird dieses Signal zusammen mit der zugehörigen Zeit und dem zugehörigen Ort als Ereignissignal Eᵢ zusammen mit xᵢ, yᵢ und Tᵢ im Ereignisspeicher 48 abgelegt.

Wenn das Fahrzeug stillsteht und dieser Stillstand mit einem Ereignis gepaart ist, wie Öffnen und/oder Schließen einer Tür, Tanken usw., so wird dies als Unterbrechung der Fahrt gewertet, so daß im Fahrtspeicher 40 die Punkte einer ersten, bis zu dem Ereignis reichenden Fahrtstrecke und einer weiteren, ab dem Ereignis weiterführenden Fahrtstrecke gespeichert werden.

Nach Beendigung einer Fahrt oder bereits während der Fahrt werden aus den im Fahrtspeicher 40 abgespeicherten Bewegungs- bzw. Fahrtstreckendaten Wegstreckendaten erzeugt, die die Fahrtstreckendaten verdichten, indem einzelne Punkte Pᵢ aus der Fahrtstrecke ausgeblendet werden und Punkte Pⱼ und Pₖ ausgewählt werden, die charakteristische Fahrtstreckenpunkte wiedergeben und Wegstreckenabschnitte definieren. Solche charakteristische Wegstreckenabschnittspunkte Pⱼ und Pₖ sind beispielsweise Wegpunkte, in denen sich die Fahrzeugrichtung αᵢ um mehr als einen vorbestimmten Wert ändert oder Punkte, in denen sich unterschiedlich gerichtete Fahrtstrecken schneiden oder sonstwie auffällige Punkte. Die aus den im Fahrtspeicher abgelegten Wegpunkten Pᵢ errechneten Wegstreckenabschnitte PⱼPₖ werden im Wegstreckenspeicher 42 in folgender Form gespeichert:
PⱼPₖ = xⱼ, yⱼ, xₖ, yₖ, tⱼₖ, Tⱼₖ, wobei x und y die geographischen Koordinaten, tⱼₖ die vom Punkt j zum Punkt k benötigte Zeitdauer und Tⱼₖ die Absolutzeit der Befahrung des Wegstreckenabschnitts PⱼPₖ sind. In dem Wegstreckenspeicher 42 werden somit eine Vielzahl von Wegstreckendaten PᵢPₖ gespeichert, die gegenüber den Wegpunkten Pᵢ verdichtet sind, da zumindest einige der Wegstrecken mehr als zwei Wegpunkte Pᵢ zusammenfassen.

Die Vielzahl der von einem Fahrzeug zurückgelegten Fahrten, bei der normalerweise gleiche Wege mehrfach zurückgelegt werden, wird im Wegstreckendateispeicher 44 weiter verdichtet. In dem Wegstreckendateispeicher wird die Absolutzeit in eine Menge von für das Verkehrsgeschehen relevanten Feldern A, unterteilt, wobei jedes A beispielsweise für einen bestimmten Zeitraum am so und so vielten Wochentag eines bestimmten Monats steht, also einen verkehrsrelevanten Zeitraum darstellt. Verkehrsrelevant ist beispielsweise, daß jeden Montagmorgen besonders starker Berufsverkehr einsetzt oder in Ländern, die Weihnachten vom 24. bis 26. Dezember feiern, am 27. Dezember eines jeden Jahres besonders starker Fernreiseverkehr auf bestimmten Strecken einsetzt. Ein Beispiel für einen nicht mit einem festen Datum verbundenen Feiertag, der mit besonderen Verkehrsverhältnissen verbunden ist, ist der Donnerstag vor Ostern (Gründonnerstag). Anhand der Zeitdauern tⱼₖ und der Absolutzeiten Tⱼₖ, zu denen bestimmte Wegstrecken PⱼPₖ befahren werden, kann eine Überprüfungsroutine des Mikroprozessors 22 selbstständig charakteristische Periodizitäten oder Ereignisse feststellen und danach die verkehrsrelevanten Zeiten A definieren. In dem Wegsteckendateispeicher werden die Wegstrecken PⱼPₖ mit den zugehörigen Fahrtzeitdauern tⱼₖ und der Häufigkeitsverteilung h (tⱼₖ) gespeichert. In dem Wegstreckendateispeicher befindet sich somit eine Wegstreckendatei, die die zum Befahren einer Wegstrecke PⱼPₖ zu erwartende Zeitdauer tⱼₖ, geordnet nach verkehrsrelevanten Zeiten Aᵢ, enthält.

Je mehr Wegstreckendaten in dem Wegstreckendateispeicher einem verkehrsrelevanten Zeitraum zugeordnet werden, umso aussagekräftiger ist die zu erwartende Fahrtzeit bei normalen Verkehrsverhältnissen. Diese Genauigkeit ist scheinbar nutzlos, wenn ein aktuelles, plötzliches Ereignis die Befahrbarkeit der Wegstrecke PⱼPₖ verändert. Um diesen Fall zusätzlich zu berücksichtigen, werden in dem Kurzzeitspeicher 46 die Wegstreckendaten aus dem Wegsteckenspeicher 42 jeweils für einen kurzen zurückliegenden Zeitraum, beispielsweise die jeweils zurückliegenden 24 Stunden, abgespeichert.

In dem Ereignisspeicher 48 werden die vom Ereignisgeber 14 gemeldeten Ereignisse Eᵢ zusammen mit ihren Koordinaten xᵢ, yᵢ und dem Zeitpunkt ihres Auftretens Tᵢ gespeichert.

In dem Steuergerät 2 werden auf diese Weise alle von dem jeweiligen Fahrzeug zurückgelegten Fahrten in Form von Wegstrecken mit zugehörigen Fahrtzeitdauern und verkehrsrelevanten Zeitpunkten gespeichert. Es versteht sich, daß die Geometriedaten der Wegstrecken, sofern sie nicht neu sind, nicht bei jedem Befahren neu aufgezeichnet werden. In diesem Fall werden nur die Fahrtzeitdauer und die Absolutzeiten bzw. verkehrsrelevanten Zeitpunkte registriert. Der Nutzer kann selbstverständlich jederzeit die Aufzeichnung und/oder Übertragung von Daten abschalten.

Um die Fahrten vieler Fahrzeuge zusammenfassen zu können und damit zu noch aussagekräftigeren und flächendeckenden Daten zu kommen, werden die in dem fahrzeugspezifischen Steuergerät 2 gespeicherten Daten aus den Speichern 44, 46 und 48 - periodisch automatisch oder auf eine Eingabe an der Einheit 28 hin - von der Datenausgabe-/Eingabeeinheit 32 an den Zentralrechner 62 übertragen. Diese Datenübertragung kann berührungslos unmittelbar aus dem Fahrzeug, über einen dem Fahrzeug entnommenen Datenträger per Kabel oder sonstwie erfolgen. Sie kann während der Fahrt, bei Fahrzeugstillstand, in einem Parkhaus, Garage, Tankstelle usw. stattfinden. Die Datenübertragung kann automatisch zeit- oder streckengesteuert, vom Neuigkeitswert der Daten abhängig oder nach Anforderung von einem Zentralrechner oder sonstwie erfolgen. Die Daten verschiedener Fahrzeuge werden in dem Wegstreckendateispeicher 72, dem Kurzzeitspeicher 74 und dem Ereignisspeicher 76 verschmolzen und ggf. fahrzeugklassenspezifisch (Fahrzeugsignalgeber 12) abgelegt. Wenn bei einer Datenübermittlung an den Zentralrechner 62 zusätzlich Fahrzeugidentifikationsdaten (Fahrzeugsignalgeber 12) übermittelt werden, kann der Zentralrechner 62 den Informationsgehalt bzw. den Neuigkeitswert der überspielten Daten auswerten und dem Sendefahrzeug eine entsprechende Gutschrift zukommen lassen. Alternativ kann über einen Zentralrechner auch eine Mautabrechnung erfolgen.

Das Problem, daß der oder die Zentralrechner des Systems ständig über flächendeckende, relevante Daten verfügt, ist wie folgt gelöst: Der Rechner jedes Fahrzeugs kennt den Neuigkeitswert der von ihm gerade ermittelten Daten hinsichtlich deren geometrischer Inhalte (Fahrtstrecke) und Zeitinhalte (Fahrtzeitdauern). Dieser Neuigkeitswert (z.B. Anzahl der neuen Daten) wird zusammen mit einer geometrischen Kennzeichnung (z.B. geographischer Mittelpunkt) einem Zentralrechner angeboten, der bei Bedarf an diesen Daten eine Gutschrift zusagt, wenn die Daten sofort gesendet werden.

Von einem Zentralrechner aus wird gezielt bei solchen Fahrzeugen nach Daten gefragt, die sich in Gebieten befinden, für die Datenbedarf besteht. Ein Zentralrechner kennt die Standorte der Fahrzeuge aufgrund deren zurückliegender Nachfrage nach Daten oder Datenübertragung. Alternativ -kann ein Zentralrechner direkt Fahrzeuge im interessierenden Gebiet dadurch ansprechen, daß er die geometrischen Daten des Zielgebietes sendet, und die Fahrzeuge diese Daten mit ihren eigenen Standortdaten vergleichen.

In dem Zentralrechner 62 baut sich eine ständig aktualisierte Datei auf, die das gesamte Verkehrsgeschehen innerhalb des erfaßten Gebietes, je nach Auswerteverfahren mehr oder weniger verdichtet, wiedergibt und von Planungsbehörden, Instandhaltungsbehörden usw. sehr spezifisch und zielgerichtet ausgewertet werden kann. Da die Daten sehr umfassend und aktuell sind, können sie für Probleme, wie Festlegung von grünen Wellen, Richtungsfahrbahnen usw. eingesetzt werden. Für die sinnvolle Steuerung von grünen Wellen ist die Kenntnis der Standorte von Ampeln, der Signalzeitenpläne und der Verkehrsströme erforderlich. Alle diese Informationen sind aus der Verschmelzung der in den einzelnen Fahrzeugen ermittelten Daten zu erhalten. Das einzelne Fahrzeug kann bei Kenntnis der Ampelstandorte und Zeitphasen eine Empfehlung zur Fahrgeschwindigkeit derart erhalten, daß die Wahrscheinlichkeit, freie Fahrt zu haben, maximal ist.

Das gesamte System erfordert keine Infrastruktur, wie Signalschleifen in den Straßen, zentrale Speicherung des Straßennetzes beispielsweise über CD-ROM, Verkehrsdatenerfassung usw., wobei nicht ausgeschlossen ist, Daten einer CD-ROM als Ausgangsdatensatz zu benutzen.

Bisher wurde das System beschrieben, soweit mit ihm über die in dem einzelnen Fahrzeug enthaltenen Signalgeber 4 bis 14 (Fig. 1) Daten erzeugt werden, die in einem Zielführungssystem nutzbar sind.

Im Folgenden wird die Verwendung des Systems dahingehend beschrieben, daß aus den erzeugten Daten Zielführungsdaten abgeleitet werden:

Es sei angenommen, in einem Fahrzeug werde gewünscht, an einem dritten Montag morgen im September von A nach B zu fahren, wobei die Fahrtstrecke vorwiegend außerstädtisch über Land verlaufe.

in der Eingabeeinheit 28 wird dieser Wunsch eingegeben, indem beispielsweise eine Visitenkarte mit dem Startpunkt A und eine weitere Visitenkarte mit dem Zielpunkt B eingelesen werden, die die geographische Information in Form eines Barcodes enthalten. Es versteht sich, daß alternativ auch eine numerische Eingabe von Startund Zielstandorten oder eine Spracheingabe möglich ist. Vorteilhaft ist Startund/oder Zielpunkt mittels Koordinaten einzugeben, da dadurch auch Ziele eingegeben werden können, die über keine postalische oder ähnliche Anschrift ansprechbar sind bzw. dem System nicht bekannt sind. Ein weiterer Vorteil der Ansprache von Zielen über ihre Koordinaten liegt darin, daß das System dadurch in der Lage ist, bei Nicht-ldentifizierbarkeit eines Zieles den nächstliegenden, identifizierbaren Punkt auszuwählen und dem Nutzer einen Weg dorthin vorzuschlagen.

Da es sich bei der beabsichtigten Fahrt um eine Strecke handelt, die das Fahrzeug normalerweise nicht zurücklegt, ist zu vermuten, daß in den Speichern 40 bis 48 keine relevante Information verfügbar ist. Mit der Eingabeeinheit 28 wird daher bei einem Zentralrechner nach relevanten Daten für die interessierende Fahrt gefragt, indem z.B. dem Zentralrechner 62 der Fahrtwunsch eingegeben wird und dieser nach Berechnung eines Weges entsprechende Ergebnisdaten zurücksendet oder aus dem Zentralrechner alle für das Quell-/Zielgebiet relevanten Daten an das Steuergerät 2 übermittelt und die Berechnung der Fahrt dann autark erfolgt. In beiden Fällen wird die Datenübertragung dem Fahrzeug vom Zentralrechner 62 in Rechnung gestellt, indem beispielsweise die Anfrage erst beantwortet wird, wenn spezifische Fahrzeugdaten bzw. ein das individuelle Fahrzeug oder den Fahrer identifizierender Code eingegeben werden. Anhand der Daten aus der Wegstreckendatei 72 oder der aktualisierten Wegstreckendatei 44 wird anhand an sich bekannter Optimierungsalgorithmen aus den einzelnen relevanten Wegstreckendaten PⱼPₖ die gesamte Fahrtstrecke so zusammengesetzt, daß im vorliegenden Fall, wo vorwiegend über Land gefahren werden soll, die Entfernung minimal ist. Wenn vorwiegend durch städtisches Gebiet gefahren wird, oder auf ausdrücklichen Wunsch des Anfragenden kann ein Optimierungsalgorithmus gewählt werden, bei dem die Gesamtfahrtzeitdauer minimal wird. Es können auch andere Optimierungskriterien, wie möglichst keine Straßengebühren, Vermeidung von Paßstrecken, minimaler Treibstoffverbrauch usw. vorgegeben werden.

Die einzelnen Wegsteckenabschnitte werden mit den im Kurzzeitspeicher 46 bzw. 74 abgespeicherten aktuellen Wegsteckenabschnittsdaten verglichen, wobei die im Kurzzeitspeicher vorhandenen Wegstreckenabschnittsdaten berücksichtigtwerden, wenn aus den Daten des Kurzzeitspeichers zu schließen ist, daß im jeweiligen Wegstreckenabschnitt sich die bei normalen Verkehrverhältnissen bzw. im Normalzustand zu erwartende Fahrtzeit nicht realisieren läßt. Über die Anzeigeeinheit 30 wird die aus den einzelnen Wegstreckenabschnitten zusammengefaßte Fahrtstrecke mit der voraussichtlichen Fahrtzeitdauer bzw. Ankunftszeit angezeigt. Wenn die Strecke abgefahren wird, werden die einzelnen Wegstreckenabschnittspunkte identifiziert, so daß laufend Routenhinweise gegeben werden können, der Standort des Fahrzeugs auf einer Streckenkarte angezeigt werden kann und bei Abweichungen zwischen der tatsächlich gefahrenen und der geplanten Strecke der Rechner im Fahrzeug korrigierend eingreift, indem er eine aktualisierte Fahrtstreckenempfehlung berechnet und anzeigt.

Der Ereignisspeicher 48 kann zusätzlich eingesetzt werden, wenn beispielsweise getankt werden muß, indem nach einer Tankstelle in dem relevanten Gebiet gefragt wird oder selbsttätig auf eine geöffnete Tankstelle hingewiesen und die Fahrt dorthin navigatorisch unterstützt wird.

Wie sich aus dem Vorstehenden ergibt, ist mit der Erfindung ein System geschaffen, das unter Einsatz moderner Sensorik, Rechner- und Speichertechnologie gestattet, vorhandene Verkehrswege optimal zu nutzen und auch bei hohen Verkehrsdichten zu vorhersehbaren Fahrtzeiten unter Optimierung des Fahrtweges zu kommen.

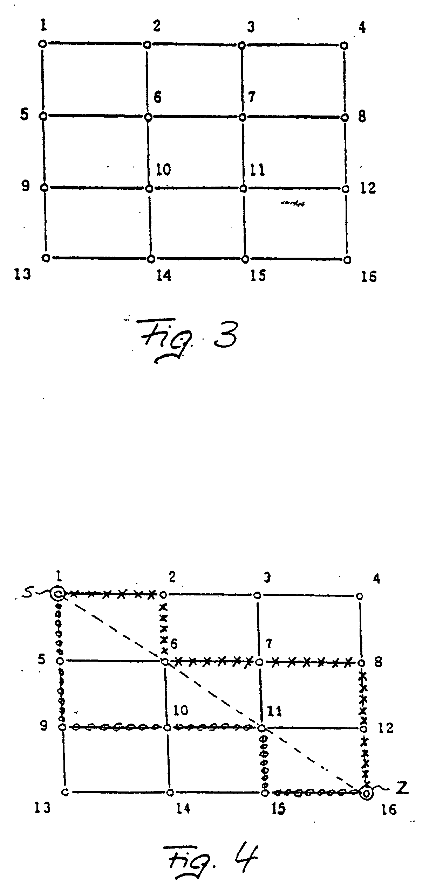

Nachstehend wird in Verbindung mit den Figuren 3 bis 10 die Vorgehensweise bei dem Aktualisieren und Verschmelzen innerhalb des erfindungsgemäßen Verfahrens erläutert.

Figur 3 zeigt einen angenommenen Fall einer bereits bekannten Strecken- bzw. Straßengeometrie mit den Punkten 1 bis 16, die in dem hier dargestellten Ausführungsbeispiel Straßenkreuzungen repräsentieren, und mit den zwischen den Punkten 1 bis 16 eingezeichneten Strecken, die in diesem Beispiel Straßen kennzeichnen. Diese bekannte Straßengeometrie kann sowohl in dem Gesamtwegstreckendateispeicher 72 des Zentralrechners 62 als auch in den in den mobilen Einheiten bzw. Fahrzeugen angeordneten Wegstreckendateispeichern 44 abgespeichert sein.

Nachstehend werden verschiedene Fälle anhand dieser bekannten und nachstehend auch ergänzten Streckengeometrie bzw. dieses befahrbaren Wegenetzes erläutert.

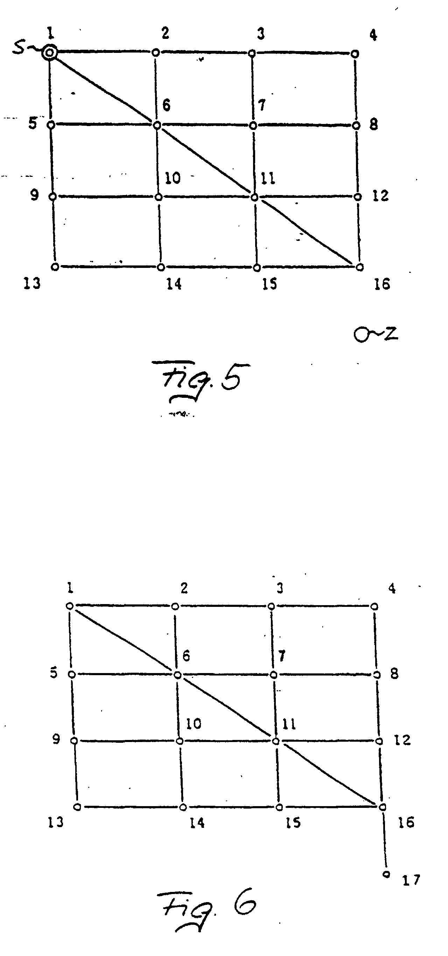

Im ersten Fall wird ausgehend von der in Figur 3 gezeigten, bekannten Streckengeometrie im Zusammenhang mit der Figur 4 angenommen, daß eine erste mobile Einheit - hier ein Kraftfahrzeug - von einem Startpunkt S, der mit dem Punkt 1 der bekannten Streckengeometrie zusammenfällt, zu einem Zielpunkt Z, der mit dem Punkt 16 zusammenfällt, fahren soll. Mithin sind also Startpunkt S und Zielpunkt Z bekannt. Der Zentralrechner 62 oder die in der mobilen Einheit vorgesehene Datenverarbeitungseinrichtung bzw. der Mikroprozessor schlagen nun aufgrund des vorhandenen Datenmaterials - bekannte Streckengeometrie der Figur 3 - unter Berücksichtigung der Fahrtzeiten von ggf. bereits früher erfolgten Fahrten der selben mobilen Einheit oder anderer mobiler Einheiten zwischen den Punkten S und Z als Route den folgenden Fahrweg vor: S → 2 → 6 → 7 → 8 → 12 → Z. Dieser Weg ist in Figur 4 mit "x" gekennzeichnet.

Während der Fahrt der mobilen Einheit überprüft der Mikroprozessor 22 durch den Sensor 4 zum Erfassen der jeweiligen Position (= GPS-Empfänger 4 in Fig. 1) und durch den Sensor 6 zum Erfassen der Bewegungsrichtung der mobilen Einheit (= Kompaß 6 in Fig. 1), ob sich diese auf der vorgeschlagenen Route bewegt. Da die Route bekannt ist, wird eine Aufzeichnung der Route nicht durchgeführt.

Demgegenüber wird aber die Fahrtzeit der ersten mobilen Einheit, d.h. die Bewegungszeit der Einheit aufgezeichnet. Hierbei kann die "reine" Fahrtzeit, d.h. die Zeit, bei der sich die mobile Einheit in Bewegung befand, von der Gesamtfahrtzeit, d.h. der Zeit, die die mobile Einheit vom Losfahren bei dem Startpunkt S bis zum Erreichen des Zielpunktes Z benötigt hat und die beispielsweise Stops an Ampeln, Baustellen usw. beinhaltet, unterschieden werden. Die Unterscheidung zwischen dem Zustand "Bewegen der mobilen Einheit" und dem Zustand "Stehen der mobilen Einheit" kann dabei beispielsweise mittels eines an einem Rad oder einer Welle der mobilen Einheit angebrachten Drehsensors, mittels eines Drehzahlsensors usw. erfolgen. Ist weiterhin ein Sensormittel für den Füllzustand des Tanks der mobilen Einheit vorgesehen, so kann auch der Zustand "Betanken der mobilen Einheit" erfaßt und im Rahmen der Zeiterfassung berücksichtigt werden. Darüber hinaus besteht die Möglichkeit die Position einer Tankstelle, sofern diese noch nicht bekannt ist, zu erfassen und an den Zentralrechner 62 beim Übermitteln der übrigen Daten der mobilen Einheit weiterzugeben, so daß im Bedarfsfalle diese Positionsinformation auch anderen mobilen Einheiten, die sich auf dieser Route bzw. in diesem Gebiet bewegen, zur Verfügung steht.

Nach Erreichen des Zielpunktes Z oder nach einer vorbestimmten Zeitperiode übermittelt die Übermittlungseinrichtung in Form der Datenausgabe-/Eingabeeinheit 32 in Figur 1 der ersten mobilen Einheit die während der Bewegung der mobilen Einheit erfaßten und in den Speicher 44, 46, 48 zwischengespeicherten Daten. Hierbei kann es sich um die "reine" Fahrtzeit, die Gesamtfahrtzeit, den Startzeitpunkt der mobilen Einheit, den Wochentag, die Position einer Tankstelle usw. handeln. Ist in der ersten mobilen Einheit eine CPU 22 vorgesehen, so können die zu übermittelnden Daten durch diese CPU 22 bereits bearbeitet sein.

Diese übermittelten Daten werden in dem Zentralrechner 62 von deren Übermittlungseinrichtung in Form der Sende-/Empfangseinrichtung 64 der Figur 2 empfangen, von der CPU 66 eines Zentralrechners verarbeitet, ausgewertet und in dem Gesamtwegstreckenspeicher 72 entsprechend gefahrener Route zwischen Startpunkt S und Zielpunkt Z, Wochentag und Startzeit abgelegt sowie mit der "reinen" Fahrtzeit und/oder mit der Gesamtfahrtzeit bewertet. Sofern noch keine Fahrtzeiten anderer Routen für den Weg von dem Startpunkt S zu dem Zielpunkt Z der Figur 4 bekannt sind, wird der Zentralrechner 62 oder die in einer mobilen Einheit vorhandene CPU 22 nach Übermittlung dieser vorhandenen Daten von dem Zentralrechner 62 an die CPU 22 dieser mobilen Einheit den Routenvorschlag S → 2 → 6 → 7 → 8 → 12 → Z wiederholen, wenn eine andere mobile Einheit den gleichen Weg fahren soll oder denselben Start- und Zielpunkt hat, da diese Route als einziger Weg mit einer realisierten Fahrtzeit "bewertet" ist.

Es kann nun der Fall eintreten, daß eine zweite mobile Einheit, oder die vorstehend bereits erwähnte, erste mobile Einheit, wieder von dem Startpunkt S zu dem Zielpunkt Z in der Figur 4 gefahren werden soll. Hierbei soll diese zweite mobile Einheit zwingend über den Punkt 9 fahren (beispielsweise, weil der Lenker dieser mobilen Einheit an dem "Straßenstück" zwischen den Punkten 5 und 9 oder zwischen den Punkten 9 und 10 eine Besorgung zu erledigen hat). Es besteht nun die Möglichkeit, daß diese "Randbedingung" bei der Eingabe des Fahrtzieles ebenfalls eingegeben wird. Der Zentralrechner 62 oder die in der mobilen Einheit vorgesehene CPU 22 schlägt dann unter Berücksichtigung dieser "Randbedingung" die folgende Route vor: S → 5 → 9 → 10 → 11 → 15 → Z. Diese Route ist in Figur 4 mit "o" gekennzeichnet.

Bei Beginn der Fahrt der mobilen Einheit wird wieder die Absolutzeit des Starts festgestellt und abgespeichert. Weiterhin läuft die Aufzeichnung der "reinen" Fahrtzeit der einzelnen Wegstreckenabschnitte und der Gesamtfahrtzeit. Da die vorgeschlagene Route Bestandteil der bekannten Straßengeometrie ist, erfolgt keine Aufzeichnung dieser Straßengeometrie. Lediglich die Position und die Bewegungsrichtung werden durch die entsprechenden Sensoren 4, 6 überprüft, um sicherzugehen, daß sich die mobile Einheit tatsächlich entlang der vorgeschlagenen Route bewegt, Anschließend, oder nach einer vorbestimmten Zeitperiode, werden die aufgezeichneten Daten durch die Übermittlungseinrichtung 32 an den Zentralrechner 62 übermittelt. Diese speichert die so übermittelten Daten in der vorstehend geschilderten Weise ab und bewertet sie anhand der "reinen" Fahrtzeit und/oder Gesamtfahrtzeit.

Vorausgesetzt, die Fahrt der zweiten mobilen Einheit sei am gleichen Wochentag und zur selben Tageszeit ausgeführt worden, wie die der ersten mobilen Einheit, dann sind die einzelnen Routen hinsichtlich des Bewertungskriteriums "kürzeste Fahrtzeit" unmittelbar vergleichbar. Dabei weise die Route S → 2 → 6 → 7 → 8 → 12 → Z eine kürzere Fahrtzeit ("reine" Fahrtzeit oder Gesamtfahrtzeit) als die Route S → 5 → 9 → 10 → 11 → 15 → Z auf, zum Beispiel weil die Ampelschaltung der zuletzt genannten Route ungünstiger ist oder weil das Verkehrsaufkommen auf dieser Route höher ist als bei der zuerst genannten. Der Zentralrechner 62 berücksichtigt dies entweder bei einem von ihm zu einer mobilen Einheit übermittelten Routenvorschlag oder übermittelt das Bewertungsergebnis an die CPU 22 der mobilen Einheit, so daß diese selbst das Bewertungsergebnis berücksichtigen kann. Mithin würde eine mobile Einheit, die den Weg vom Startpunkt S zu dem Zielpunkt Z in der Figur 4 an einem bestimmten Wochentag zu einer bestimmten Tageszeit zurücklegen soll, auf Basis dieses Bewertungsergebnisses den zeitminimalen Weg befahren.

Es ist einsichtig, daß bei einer Wiederholung dieser Vorgehensweise mit einer großen Zahl mobiler Einheiten im Rahmen der in Figur 3 gezeigten Straßengeometrie auch für andere Tageszeiten und Wochentage günstige Routen ermittelt werden können. Es ist in diesem Zusammenhang zu bemerken, daß die mit den Fahrtzeiten bewertete Abspeicherung von Routen sowohl in der Weise geschehen kann, daß die Route in ihrer Gesamtheit abgespeichert wird, oder daß die einzelnen Routensegmente (Wegstreckenabschnitte zwischen zwei Punkten), bewertet mit realisierten Fahrtzeiten, abgespeichert werden können. Bei der zuletzt genannten Vorgehensweise besteht zwar ein erheblich höherer Speicherbedarf, jedoch wird durch diese Vorgehensweise eine weitaus größere Flexibilität erreicht, da bei einer die Fahrtzeit verlängernden Störung innerhalb einer Route nicht eine komplette Route vollständig neu vorgeschlagen zu werden braucht, sondern ggf. nur ein Segment ausgetauscht werden muß, wie dies nachstehend noch im Detail erläutert wird.

Bei der Ermittlung der hinsichtlich der Fahrtzeit optimalen Route kann die Situation auftreten, daß eine an einem Wochentag zu einer bestimmten Tageszeit günstigste Route zu einer anderen Tageszeit und/oder einem anderem Wochentag ungünstig ist. Weiterhin ist ohne weiteres einsichtig, daß bei einer großen Zahl an Fahrten von mobilen Einheiten im befahrbaren Wegenetz gemäß Figur 3 die Aussagekraft und Verläßlichkeit der Routenempfehlung zunimmt. Mithin können sich für unterschiedliche Tageszeiten und Wochentage die verschiedensten Routenvorschläge für einen zeitminimalen Weg von einem Startpunkt S zu einem Zielpunkt Z ergeben.

Dabei werden auch Veränderungen in der Straßengeometrie berücksichtigt. Ist beispielsweise auf der Route S → 2 → 6 → 7 → 8 → 12 → Z zwischen den Punkten 6 und 7 eine Baustelle eröffnet worden, an der sich der Verkehr staut, so würde dies durch das erfindungsgemäße Verfahren dadurch berücksichtigt werden, daß sich die Fahrtzeit entlang dieser Route erhöht. Am Ende der Fahrt würde dies dem Zentralrechner 62 übermittelt werden. Nach einer bestimmten, nach der gewünschten Stabilität des Ergebnisses freiwählbaren Grundgesamtheit an Fahrtzeiten entlang dieser Route würde der Zentralrechner 62 diese Route neu bewerten. Die Neu-Bewertung würde bei einem Routenvorschlag durch den Zentralrechner 62 oder durch die in der mobilen Einheit vorgesehenen CPU 22 beispielsweise insofern berücksichtigt werden, daß entweder eine vollständig neue Route vorgeschlagen würde (z.B. die Route S → 5 → 9 → 10 → 11 → 15 → Z) oder aber dadurch, daß innerhalb des ersten Routenvorschlages eine Modifikation dahingehend vorgenommen wird, daß die Route nunmehr lautet: S → 2 → 6 → 10 → 11 → 12 → Z.

Das erfindungsgemäße Zielführungssystem bzw. -verfahren ist nicht nur in der Lage bei einer bekannten Straßengeometrie eine zeitminimale Route aus mehreren möglichen Routen in Abhängigkeit von der Tageszeit, von dem Wochentag usw. zu bestimmen und diesen Routenvorschlag ständig zu aktualisieren, sondern auch die Straßengeometrie zu aktualisieren. Dies soll nachstehend erläutert werden.

Es wird angenommen, daß eine dritte mobile Einheit ebenfalls von dem Startpunkt S zu dem Zielpunkt Z fahren soll, wobei die Straßengeometrie gemäß den Figuren 3 und 4 wiederum bekannt sei. Tatsächlich fährt die mobile Einheit aber aufgrund der Kenntnis des Benutzers die folgende Route: S → 6 → 11 → Z, wie dies in Figur 4 durch die unterbrochene Linie gezeigt ist. Während der Fahrt der mobilen Einheit wird diese neue Streckengeometrie, insbesondere mittels der Sensoren 4, 6 zum Erfassen der Position und der Bewegungsrichtung der mobilen Einheit aufgezeichnet ünd am Ende der Bewegung oder nach einer vorbestimmten Zeitperiode an den Zentralrechner 62 übermittelt. Der Zentralrechner 62 kann nunmehr seinen Datenbestand hinsichtlich der Straßengeometrie aktualisieren und dies auch der CPU 22 der mobilen Einheiten mitteilen. Da während der Aufzeichnung dieser neuen, bisher unbekannten Route ebenfalls die Fahrtzeit aufgezeichnet wurde, kann diese Route bzw. ihre einzelnen Segmente ebenfalls hinsichtlich der Fahrtzeit bewertet werden und ggf. als zeitoptimale Route vorgeschlagen werden.

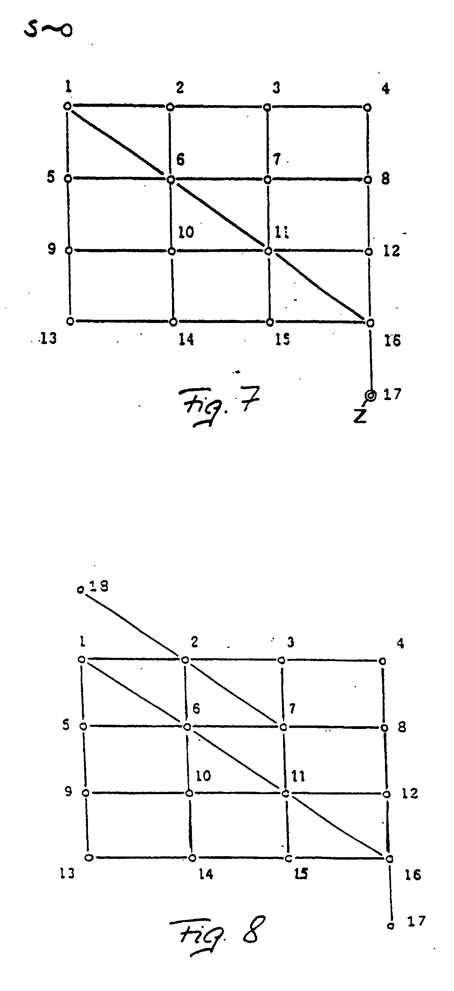

In einem weiteren Fall im Zusammenhang mit der Figur 5 soll nun angenommen werden, daß eine mobile Einheit von dem Startpunkt S, identisch mit Punkt 1, zu einem außerhalb der bekannten Streckengeometrie liegenden und damit dem Navigationssystem unbekannten Zielpunkt Z fahren soll. Da der Zentralrechner 62 oder die in der mobilen Einheit vorgesehene CPU 22 aufgrund der bekannten Streckengeometrie die Route außerhalb der bekannten Streckengeometrie zu dem Zielpunkt Z nicht kennt, jedoch auf Grund der Koordinateneingabe für diesen Zielpunkt Z erkennt, daß der Punkt 16 der nächstliegende Punkt der bekannten Straßengeometrie ist, schlagen sie eine Route vor, die die mobile Einheit in unmittelbarr Nähe zu dem Zielpunkt Z bringt. Diese Route kann, da die im Zusammenhang mit dem Fall der Figur 4 neu erkannte Route nunmehr durch Verschmelzen von Daten, die die Straßengeometrie abbilden, bekannt ist, beispielsweise wie folgt lauten: S → 6 → 11 → 16. Ab dem Punkt 16 fährt die mobile Einheit eigenständig zu dem Zielpunkt Z. Dieser neue Weg von dem Punkt 16 zu dem Zielpunkt Z wird aufgezeichnet und am Ende der Bewegung oder nach einer vorbestimmten Zeitperiode zumindest der neue Wegstreckenabschnitt an den Zentralrechner 62 übermittelt, der hierdurch seinen Datenbestand erweitert. In Figur 6 ist dann die nach dieser Fahrt bekannte Straßengeometrie wiedergegeben, wobei der neu hinzugekommene Kreuzungspunkt mit 17 bezeichnet ist.

Hat der Benutzer der mobilen Einheit den Weg bzw. den Zielpunkt ohne Führung durch die erfindungsgemäße Vorrichtung gefunden, so ist die Vorrichtung aufgrund der Aufzeichnung der Straßengeometrie in der Lage, die mobile Einheit von diesem Zielpunkt mit hoher Wahrscheinlichkeit beispielsweise zum Ausgangspunkt zurückzuführen.

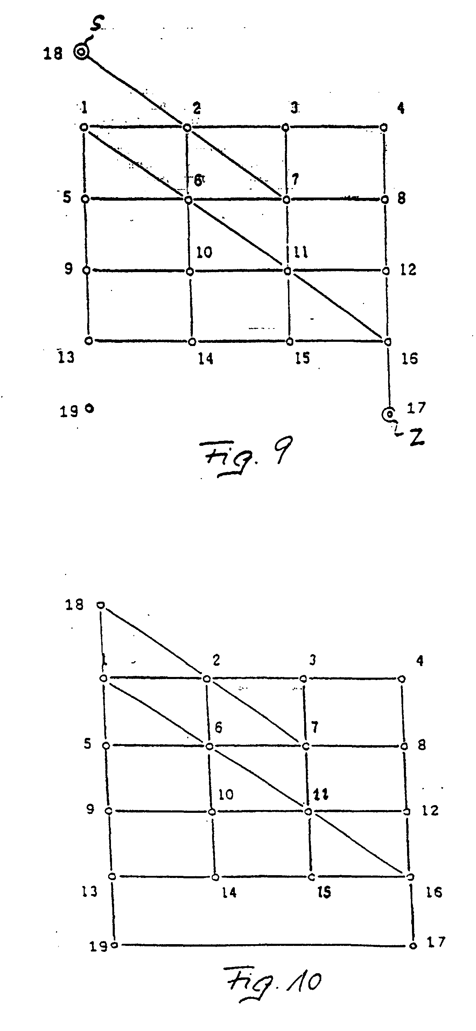

Die Figur 7 gibt den zu dem vorstehend erläuterten Fall analogen Fall wieder, nämlich daß der Zielpunkt Z bekannt, der Startpunkt S jedoch unbekannt ist. Die mobile Einheit setzt sich zunächst ohne Routenvorschlag in Bewegung, bis sie einen dem Zentralrechner 62 oder der in der mobilen Einheit vorgesehenen CPU 22 bekannten Punkt erreicht hat. Im vorliegenden Fall ist dies der Punkt 2. Ebenso könnten dies auch die Punkte 1, 3, 4, 5, 9 usw. sein. Der Weg von dem Startpunkt S zu dem Punkt 2 wird gleichzeitig mit der Fahrtzeit aufgezeichnet. Nach Erreichen des Punktes'2 ist der Zentralrechner 62 oder die in der mobilen Einheit vorgesehene Datenverarbeitungseinrichtung 22 in der Lage, auf Grundlage der bestehenden, mit den Beispielen der Figuren 5 und 6 durch Verschmelzung aktualisierten Datenbasis hinsichtlich der Straßengeometrie eine Route vorzuschlagen. Diese Route könnte lauten: 2 → 3 → 7 → 11 → 16 → Z. Da der Lenker der mobilen Einheit aber weiß, daß zwischen dem Punkt 2 und 7 eine direkte geometrische Erreichbarkeit besteht, benutzt er diese Verbindung zum Punkt 7. Die mobile Einheit zeichnet neben der bereits zwischen dem Startpunkt S und dem Punkt 2 von der mobilen Einheit zurückgelegten Strecke diese neue Strecke ebenfalls auf. Ab dem Punkt 7 stellt die mobile Einheit ihre Aufzeichnung hinsichtlich der Straßengeometrie ein, da sie sich auf bereits bekannten Wegstreckenabschnitten bewegt, jedoch werden weiterhin die Fahrtzeiten für die Wegstreckenabschnitte und/oder die absoluten Zeitpunkte des Erreichens eines Wegpunktes erfaßt und aufgezeichnet. Am Ende der Bewegung oder nach einer vorbestimmten Zeitperiode werden die neu erkannten Straßensegmente an den Zentralrechner 62 übermittelt, der diese hinsichtlich der Fahrtzeit bewertet und abspeichert. Hierbei ist die neue Straßenkreuzung mit 18 bezeichnet. In Figur 8 ist die nun bekannte Straßengeometrie wiedergegeben.

Diese aktualisierte Straßengeometrie kann dann allen mobilen Einheiten automatisch oder nach Anforderung zur Verfügung gestellt werden.

In der Figur 9 ist ein letzter Fall gezeigt. Hierbei sei die Lage des Startpunktes S und des Zielpunktes Z bekannt. Die mobile Einheit soll aber auf ihrer Fahrt zum Zielpunkt Z einen außerhalb der bekannten Straßengeometrie liegenden Punkt 19 anfahren. Da der Zentralrechner 62 oder die in der mobilen Einheit angeordnete CPU 22 nach dem im Zusammenhang mit den Figuren 7 und 8 erläuterten Fall die Verbindung zwischen dem Startpunkt S (= Punkt 18) und dem Punkt 2 bekannt ist und da weiterhin auf Grund der Koordinateneingabe für den anzufahrenden Punkt 19 den Systemkomponenten bzw. Einrichtungen 62, 22 bekannt ist, daß der Punkt 13 der zu dem Punkt 19 nächstliegende Punkt der bekannten Straßengeometrie ist, könnte der Routenvorschtag wie folgt aussehen: S → 2 → 6 → 10 → 9 → 13. Vom Punkt 13 an müßte der Lenker versuchen den Weg zu dem Punkt 19 zu finden von dort zurück zu dem Punkt 13 zu fahren oder einen Weg zu dem Punkt 14 oder eine direkte Verbindung zu dem Zielpunkt Z suchen. Es sei angenommen, daß der Lenker der mobilen Einheit den direkten Weg zum Zielpunkt Z sucht, und es sei weiterhin angenommen, daß dem Lenker der mobilen Einheit eine direkte Verbindung zwischen dem Startpunkt S (= Punkt 18) und dem Punkt 1 bekannt sei. Die Fahrt zwischen dem Startpunkt S und dem Punkt 1 sowie zwischen dem Punkt 13 und dem Punkt 19 als auch zwischen dem Punkt 19 und dem Zielpunkt Z wird durch die mobile Einheit aufgezeichnet und in der vorstehend beschriebenen Weise an den Zentralrechner 62 übermittelt. Diese wertet die übermittelten Daten ebenfalls in der vorstehend beschriebenen Weise aus und stellt sie den mobilen Einheiten zur Verfügung. Figur 10 gibt die nunmehr durch Verschmelzen von Daten bekannte Straßengeometrie wieder.

Im Gegensatz zu den bekannten Zielführungsverfahren bzw. -systemen ermöglicht also das erfindungsgemäße System bzw. Verfahren durch das Verschmelzen von Daten, die die Realität bezüglich Fahrweg und Verkehr abbilden und speichern, eine ständige Aktualisierung sowohl hinsichtlich der befahrbaren Wege als auch hinsichtlich der zeitminimalen Routen zwischen zwei beliebigen Punkten basierend auf realisierten und realisierbaren Fahrt- bzw. Bewegungszeiten. Weiterhin kann das erfindungsgemäße System bzw. Verfahren auch auf Grund der Verwendung von Koordinaten eine mobile Einheit dicht an einen Punkt führen, zu dem auf Grundlage der in dem System bekannten Straßengeometrie keine geometrische Erreichbarkeit besteht.

Abschließend ist noch zu bemerken, daß unter dem Begriff "mobile Einheit" sowohl Fahrzeuge aller Art als auch Fußgänger verstanden werden können, die mit einer tragbaren Einrichtung ausgestattet sind, die den gleichen Aufbau aufweist, wie die vorstehend erläuterte.

## Patentansprüche

1. Verfahren zum Erzeugen und Aktualisieren von in einem Zielführungssystem wenigstens einer mobilen Einheit nutzbaren Daten,
- bei dem während einer Bewegung der mobilen Einheit zumindest in vorbestimmten Zeitintervallen Bewegungsstreckendaten generiert und in mindestens einer in der mobilen Einheit vorgesehenen Speichereinrichtung abgespeichert werden, wobei die Bewegungsstrekkendaten die zurückgelegten Strecken zumindest punktweise abbilden und jedem Punkt Pᵢ seine geographischen Koordinaten xᵢ, yᵢ zuordnen, und
- bei dem Wegstreckendaten generiert und in der Speichereinrichtung, die in der mobilen Einheit vorgesehen ist, abgespeichert werden, wobei für die Wegstreckendaten aus den Bewegungsstreckendaten Punkte Pⱼ und Pₖ ausgewählt werden, die einander anschließende Wegstreckenabschnitte PⱼPₖ definieren, denen als Daten zumindest ihre geographischen Anfangs- und Endpunkte zugeordnet werden,
**dadurch gekennzeichnet, daß** aus den Wegstreckendaten eine Wegstreckendatei generiert und in der in der mobilen Einheit vorgesehenen Speichereinrichtung abgespeichert wird, die fortlaufend anhand neu generierter Wegstreckendaten der mobilen Einheit ergänzt und/oder aktualisiert wird.

2. Verfahren nach Anspruch 1,
bei dem neben den geographischen Koordinaten xᵢ, yᵢ der Punkte Pᵢ der Bewegungsstreckendaten die Bewegungsrichtung αᵢ der mobilen Einheit für die Wegstreckendaten erfaßt wird.

3. Verfahren nach Anspruch 2,
bei dem die Bewegungsrichtung αᵢ aus den geographischen Koordinaten xᵢ, yᵢ der Punkte Pᵢ der Bewegungsstreckendaten abgeleitet wird.

4. Verfahren nach Anspruch 2,
bei dem die Bewegungsrichtung αᵢ mittels mindestens einer in der mobilen Einheit vorgesehenen Sensoreinrichtung erfaßt wird.

5. Verfahren nach einem der Ansprüche 1 bis 4,
bei dem die Generierung von Wegstreckendaten in der mobilen Einheit unterbrochen wird, wenn die generierten Wegstreckendaten bereits in der Speichereinrichtung der mobilen Einheit als bekannt vorhanden sind, und bei dem die Generierung dieser Daten aufgenommen wird, wenn die generierten Wegstreckendaten in der Speichereinrichtung der mobilen Einheit noch nicht vorhanden sind.

6. Verfahren nach einem der Ansprüche 1 bis 5,
bei dem eine in der mobilen Einheit vorgesehene Datenverarbeitungseinrichtung bei Anforderung durch Eingabe eines Ziel- und ggf. Startpunktes für die mobile Einheit in eine in der mobilen Einheit vorgesehene Eingabeeinrichtung einen Routenvorschlag anhand der bereits in der Speichereinrichtung der mobilen Einheit abgespeicherten Wegstreckendatei erstelltund in der mobilen Einheit optisch darstellt und/oder akustisch wiedergibt.

7. Verfahren nach einem der Ansprüche 1 bis 6,
bei dem wenigstens ein von der mindestens einen mobilen Einheit getrennt angeordneter Zentralrechner vorgesehen ist, dem die Wegstreckendateien von mehreren mobilen Einheiten übermittelt werden und der diese zumindest in vorbestimmten Zeitintervallen miteinander zu mindestens einer Gesamtwegstreckendatei verschmilzt.

8. Verfahren nach Anspruch 7,
bei dem ein Zentralrechner vor dem Verschmelzen von Wegstreckendateien den Neuigkeitswert einer von einer mobilen Einheit übermittelten Wegstrekkendatei bestimmt und diese übermittelte Wegstreckendatei mit der Gesamtwegstreckendatei nur dann verschmilzt, wenn diese Wegstreckendatei zumindest teilweise als neu erkannt worden ist.

9. Verfahren nach Anspruch 7 oder 8,
bei dem den von einzelnen mobilen Einheiten überspielten Wegstreckendateien eine Kennung zur Klassifizierung der mobilen Einheit zugeordnet wird und in einem Zentralrechner unterschiedliche Gesamtwegstreckendateien erzeugt werden, die den Kennungen entsprechen.

10. Verfahren nach einem der Ansprüche 7 bis 9,
bei dem den von den mobilen Einheiten übermittelten Daten ein Identifizierungscode für die mobile Einheit zugeordnet wird und der Neuigkeitswert der übermittelten Daten zusammen mit dem Identifizierungscode der mobilen Einheit in einem Zentralrechner erfaßt wird, um eine Vergütung für die übermittelnde mobile Einheit zu errechnen.

11. Verfahren nach einem der Ansprüche 7 bis 10,
bei dem die Übermittlung der von einer mobilen Einheit generierten Wegstreckendatei an einen Zentralrechner unmittelbar am Ende einer Bewegung der mobilen Einheit erfolgt.

12. Verfahren nach einem der Ansprüche 7 bis 11,
bei dem die Übermittlung der von der mobilen Einheit generierten Wegstrekkendatei an einen Zentralrechner nach einer vorbestimmten Zeitperiode erfolgt.

13. Verfahren nach einem der Ansprüche 7 bis 12,
bei dem ein Zentralrechner die wenigstens eine Gesamtwegstreckendatei an die mobilen Einheiten entsprechend einem vorgegebenen Kriterium übermittelt.

14. Verfahren nach Anspruch 13,
bei dem die Übermittlung der Gesamtwegstreckendatei von einem Zentralrechner zu den mobilen Einheiten automatisch, vorzugsweise nach einer vorbestimmten Zeitperiode erfolgt.

15. Verfahren nach Anspruch 13 oder 14,
bei dem die Übermittlung der Gesamtwegstreckendatei von einem Zentralrechner zu einer mobilen Einheit auf Anforderung durch die mobile Einheit erfolgt.

16. Verfahren nach einem der Ansprüche 7 bis 15,
bei dem ein Zentralrechner bei Anforderung seitens einer mobilen Einheit durch Mitteilung eines Ziel- und ggf. Startpunktes für diese mobile Einheit einen Routenvorschlag anhand der wenigstens einen bereits in dem Zentralrechner abgespeicherten Gesamtwegstreckendatei erstellt und der mobilen Einheit übermittelt.

17. Verfahren nach einem der Ansprüche 6 bis 16,
bei dem die in der mobilen Einheit vorgesehene Datenverarbeitungseinrichtung oder ein Zentralrechner bei einem unbekannten Start- und/oder Zielpunkt den nächstliegenden, bekannten Start- und/oder Zielpunkt aus der in der mobilen Einheit abgespeicherten Wegstreckendatei oder der wenigstens einen in dem Zentralrechnerabgespeicherten Gesamtwegstreckendatei für einen Routenvorschlag verwendet.

18. Verfahren nach einem der Ansprüche 6 bis 17,
bei dem die Angabe des Start-, Ziel- und/oder eines zwischen Start- und Zielpunkt liegenden Punktes in Koordinaten erfolgt.

19. Verfahren nach Anspruch 18,
bei dem die Koordinaten durch einen Barcode repräsentiert werden.

20. Verfahren nach einem der Ansprüche 6 bis 19,
bei dem die Generierung der Bewegungsstreckendaten durch die mobile Einheit aufgenommen wird, wenn sich die mobile Einheit auf einer von einem Zentralrechner oder von der in der mobilen Einheit vorgesehenen Datenverarbeitungseinrichtung nicht vorgeschlagenen Route bewegt.

21. Verfahren nach einem der Ansprüche 1 bis 20,
bei dem die Generierung der Bewegungsstreckendaten unterbrochen wird, wenn die Bewegung unterbrochen wird.

22. Verfahren nach einem der Ansprüche 1 bis 21,
bei dem die Erfassung der absoluten Koordinaten der mobilen Einheit anhand des GPS-Systems erfolgt.

23. Verfahren nach einem der Ansprüche 1 bis 22.
bei dem neben den geographischen Koordinaten xᵢ, yᵢ der Punkte Pᵢ der Bewegungsstreckendaten die Zeitpunkte Tᵢ ihres Erreichens erfaßt und in der Speichereinrichtung der mobilen Einheit gespeichert werden.

24. Verfahren nach einem der Ansprüche 1 oder 23,
bei dem den Wegstreckenabschnitten PⱼPₖ der Wegstreckendaten weiterhin die Absolutzeiten Tⱼₖ der Bewegung zugeordnet werden.

25. Verfahren nach einem der Ansprüche 1 bis 24,
bei dem den Wegstreckenabschnitten PⱼPₖ der Wegstreckendaten weiterhin die benötigten Bewegungszeitdauern tⱼₖ zugeordnet werden.

26. Verfahren nach Anspruch 25,
bei dem in der wegstreckendatei geographisch gleiche Wegstreckenabschnitte verschiedener Bewegungen der mobilen Einheit für vorbestimmte Zeitabschnitte der Bewegungszeitdauer tⱼₖ zusammengefaßt werden.

27. Verfahren nach Anspruch 25 oder 26,
bei dem Mittelwerte aus den Bewegungszeitdauern tⱼₖ gebildet werden.

28. Verfahren nach einem der Ansprüche 25 bis 27,
bei dem den Wegstreckendaten PⱼPₖ die Häufigkeitsverteilung der Bewegungszeitdauern tⱼₖ bei bezüglich des typischen Verkehrsgeschehens gleichen Zeitabschnitten zugeordnet wird.

29. Verfahren nach einem der Ansprüche 24 bis 28,
bei dem eine Stillstandsdauer der mobilen Einheit bei der Ermittlung der Bewegungszeitdauer tⱼₖ unterdrückt wird.

30. Verfahren nach einem der Ansprüche 24 bis 29,
bei dem die Wegstreckendatei die bezüglich Tageszeit, Wochentag, Lage des Wochentages innerhalb eines Monats und dem Monat gemittelten Wegstrekkenabschnittsdaten zusammen mit der Häufigkeitsverteilung der Bewegungszeitdauern tⱼₖ enthält.

31. Verfahren nach einem der Ansprüche 24 bis 30,
bei dem die jeweils aktuellsten Wegstreckenabschnittsdaten in einer Kurzzeitwegstreckendatei gespeichert werden, die für einen kurzen zurückliegenden Zeitraum die zu den einzelnen Wegstreckenabschnittsdaten gehörenden realisierten Bewegungszeitdauern tⱼₖ enthält.

32. Verfahren nach einem der Ansprüche 1 bis 31,
bei dem die Punkte Pⱼ, Pₖ einer Wegstrecke PⱼPₖ entsprechend dem Auftreten von Richtungswechseln festgelegt werden.

33. Verfahren nach einem der Ansprüche 1 bis 32,
bei dem die Punkte Pⱼ, Pₖ einer Wegstrecke PⱼPₖ derart festgelegt werden, daß sie in den Schnittpunkten von Wegstrecken unterschiedlicher Richtungen liegen.

34. Verfahren nach einem der Ansprüche 1 bis 33,
bei dem zusätzliche Daten in den Wegstreckenabschnittsdaten gespeichert werden, wie Stillstandszeiten der mobilen Einheit usw.

35. Verfahren nach einem der Ansprüche 1 bis 34,
bei dem die Daten innerhalb eines Fahrzeugs als mobile Einheit ermittelt und gespeichert werden.

36. Verfahren zum Herleiten von Zielführungsdaten aus nach dem Verfahren gemäß einem der Ansprüche 1 bis 35 erzeugten Daten,
bei dem einem Rechner mit Kenntnis einer Wegstreckendatei ein Bewegungswunsch mit Anfangspunkt, Endpunkt und Start- oder Zielzeit sowie ggf. einem Sonderwunsch eingegeben wird, der Rechner aus der Wegstreckendatei eine aus einzelnen Wegstreckenabschnitten zusammengesetzten Weg unter Minimierung der Bewegungszeitdauer oder der Weglänge und/oder ggf. unter Berücksichtigung von Sonderwünschen errechnet und aus dem so ermittelten Weg hergeleitete relevante Daten in einer Anzeigeeinheit dargestellt und/oder akustisch wiedergegeben werden.

37. Verfahren nach Anspruch 36,
bei dem der Rechner beim Errechnen eines Weges die jeweils aktuellsten Wegstreckenabschnittsdaten aus einer Kurzzeitwegstreckendatei mit den entsprechenden Wegstreckenabschnittsdaten aus der Wegstreckendatei berücksichtigt, bei denen keine atypischen Abweichungen zu den entsprechenden aktuellen Wegstreckenabschnittsdaten vorliegen.

38. Vorrichtung zum Durchführen des Verfahrens nach einem der Ansprüche 1 bis 37 zur Verwendung bei mindestens einer mobilen Einheit, enthaltend:
einen Standortsensor (4) zur Ermittlung der augenblicklichen geographischen Position der mobilen Einheit,
einen Weggeber (8) zum Erzeugen eines einer zurückgelegten Entfernung entsprechenden Wegsignals,
ein elektronisches Steuergerät (2) mit einem Mikroprozessor (22) mit ROM-(24) und RAM-Speicher (26), sowie
einen Bewegungsspeicher (40),
einen Wegstreckenspeicher (42),
einen Wegstreckendateispeicher(44),
Mittel zum Aktualisieren der Wegstreckendatei anhand neu generierter Wegstreckendaten,
ggf. einen Kurzzeitwegstreckenspeicher (46),
eine Eingabeeinheit (28) und
eine Anzeigeeinheit (30).

39. Vorrichtung nach Anspruch 38,
bei der ein Richtungssensor (6) zur Ermittlung der augenblicklichen geographischen Richtung der mobilen Einheit vorgesehen ist.

40. Vorrichtung nach Anspruch 38 oder 39,
bei der ein Zeitgeber (10) zum Erzeugen eines Zeitsignals vorgesehen ist.

41. Vorrichtung nach einem der Ansprüche 38 bis 40,
bei der die Eingabeeinheit (28) eine Einrichtung zum Einlesen von auf einem Datenträger befindliche Adresseninformation als Zielpunkt enthält.

42. Vorrichtung nach Anspruch 41,
bei der die Einrichtung eine Strich-Code-Leseeinrichtung ist.

43. Vorrichtung nach einem der Ansprüche 38 bis 42,
bei der eine in der mobilen Einheit angeordnete Übermittlungseinrichtung (32) zum ggf. automatischen Übermitteln der erfaßten Daten und ein getrennt von der mobilen Einheit angeordneter Zentralrechner (62), der die von der Übermittlungseinrichtung (32) der mobilen Einheit übermittelten Daten empfängt sowie auswertet und die Auswertung speichert.

44. Vorrichtung nach Anspruch 43,
bei der eine in der Übermittlungseinrichtung (32) angeordnete Empfangseinheit, die Daten von einem Zentralrechner (62) empfängt, und eine in der mobilen Einheit angeordnete Ausgabeeinrichtung (30) zum Ausgeben der von einem Zentralrechner (62) empfangenen Daten.

45. Vorrichtung nach Anspruch 43 oder 44,
bei dem die Übermittlungseinrichtung (32) eine Schnittstelle aufweist.

46. Vorrichtung nach einem der Ansprüche 43 bis 45,
bei dem die Übermittlungseinrichtung (32) eine Funkeinrichtung aufweist.

47. Vorrichtung nach einem der Ansprüche 38 bis 46,
bei der in der mobilen Einheit weiterhin Mittel (14) zum Erfassen der Tageszeit des Beginns und des Endes der Bewegung und/oder des Wochentags der Bewegung der mobilen Einheit vorgesehen sind.

48. Vorrichtung nach einem der Ansprüche 38 bis 47, welches insbesondere bei einer motorbetriebenen mobilen Einheit verwendbar ist,
bei der Mittel zum Erfassen der Motordrehzahl vorgesehen sind.

49. Vorrichtung nach einem der Ansprüche 38 bis 48, welches insbesondere bei einer motorbetriebenen mobilen Einheit verwendbar ist,
bei der Mittel zum Erfassen des Füllzustandes einer in der mobilen Einheit angeordneten Speichereinheit für die zum Antrieb des Motors notwendige Energie vorgesehen sind.

50. Vorrichtung nach einem der Ansprüche 39 bis 49,
bei der die Mittel zum Erfassen der Bewegungsrichtung der mobilen Einheit ein Gyrometer oder/und einen Kompaß (6) aufweisen.

51. Vorrichtung nach einem der Ansprüche 38 bis 50,
bei der die Mittel zum Erfassen der jeweiligen absoluten Position der mobilen Einheit einen GPS-Empfänger (4) aufweisen.

52. Vorrichtung nach einem der Ansprüche 43 bis 51,
bei der ein Zentralrechner (62) Teil einer stationären Navigations-Baugruppe ist, die neben dem Zentralrechner (62) eine Übermittlungseinrichtung (64) zum Empfangen von Daten von der mobilen Einheit sowie zum Senden von Daten an die mobile Einheit und wenigstens einen Speicher (68, 70, 72, 74, 76) aufweist.

## Claims

1. A method for generating and updating data for use in a destination tracking system of at least one mobile unit,
- in which - during a motion of said mobile unit - at least at predetermined time intervals, travelled distance data are generated and stored in at least one storage device provided in said mobile unit, wherein the travelled distance data represent the sections covered by at least a series of nodes Pᵢ and to each node Pᵢ are assigned its geographical coordinates xᵢ and yᵢ,
- in which section data are. generated and stored in the storage device provided in the mobile unit, and in which, for generating the section data, nodes Pⱼ and Pₖ which define contiguous sections PⱼPₖ, to which at least their geographical starting and end points are assigned, are selected from the travelled distance data,
**being characterized by** generating a section data file from the section data and storing the section data file in the storage device provided in the mobile unit, said section data file is continuously supplemented and/or updated with section data newly generated by the mobile unit.

2. The method according to Claim 1, in which, in addition to the geographical coordinates xᵢ, yᵢ of the nodes Pᵢ of the travelled distance data, the direction of motion αᵢ of the mobile unit is recorded for the section data.

3. The method according to Claim 2, in which the direction of motion αᵢ is derived from the geographical coordinates xᵢ, yᵢ of the nodes Pᵢ of the travelled distance data.

4. The method according to Claim 2, in which the direction of movement αᵢ is detected by means of at least one sensor provided in the mobile unit.

5. The method according to any one of Claims 1 to 4, in which the generation of section data is interrupted in the mobile unit if the generated section data are already known in the storage device of the mobile unit and in which the generation of data is re-started if the section data are not yet available in the storage device of the mobile unit.

6. The method according to any one of Claims 1 to 5, in which a data-processing device provided in the mobile unit prepares a recommended route from a route data file already available in the storage device of the mobile unit, if so requested by inputting a point of destination and, possibly, a starting point into an input device provided in the mobile unit, said recommended route being represented visually and/or acoustically in the mobile unit.

7. The method according to any one of Claims 1 to 6, in which there is provided at least one central computer located remote from said at least one mobile unit to which the section files of several mobile units are transmitted and which merges these at least at predetermined time intervals into at least one overall route file.

8. The method according to claim 7, in which a central computer, before merging section files, checks the file transmitted by a mobile unit for its update value and only merges said file with the overall route file if it contains at least partially new information.

9. The method according to Claim 7 or 8, in which a characteristic classifying the mobile unit is added to the files transmitted by the individual mobile units and in which a central computer generates different overall route files corresponding to the different characteristics.

10. The method according to any one of Claims 7 to 9, in which a code identifying the mobile unit is added to the data transmitted by the mobile units and in which the update value of the data transmitted is detected together with the identification code of the mobile unit by the central computer for calculating a reimbursement fee for the transmitting mobile unit.

11. The method according to any one of Claims 7 to 10, in which the section file generated by a mobile unit is transmitted immediately after the motion of the mobile unit terminates.

12. The method according to any one of Claims 7 to 11, in which the section file generated by a mobile unit is transmitted to a central computer after a predetermined time interval.

13. The method according to any one of Claims 7 to 12, in which a central computer transmits the at least one overall route file to the mobile units according to predetermined criteria.

14. The method according to Claim 13, in which the overall route file is transmitted automatically to the mobile units, preferably after a predetermined time interval.

15. The method according to Claim 13 or 14, in which the overall route file is transmitted by a central computer to a mobile unit on request by the mobile unit.

16. The method according to any one of Claims 7 to 15, in which a central computer prepares and transmits to a mobile unit a recommended route calculated on the basis of the at least one overall route file stored in the central computer, if so requested by said mobile unit transmitting a point of destination and possibly a starting point.

17. The method according to any one of Claims 6 to 16, in which - if a point of destination and/or a starting point is unknown - the data processing unit provided in the mobile unit or a central computer uses the nearest known starting point and/or point of destination from the section file stored in the mobile unit or from the at least one overall route file stored in the central computer to calculate a recommended route.

18. The method according to any one of Claims 6 to 17, in which the starting point, the point of destination and/or another point lying between the starting point and the point of destination are specified by their coordinates.

19. The method according to Claim 18, in which the coordinates are represented by a bar-code.

20. The method according to any one of Claims 6 to 19, in which the generation of the travelled distance data by the mobile unit restarts when the mobile unit takes a route not recommended by a central computer or by the data-processing device of the mobile unit.

21. The method according to any one of Claims 1 to 20, in which the generation of the travelled distance data is terminated if motion ceases.

22. The method according to any one of Claims 1 to 21, in which the absolute coordinates of the mobile unit are determinated using the Geographical Positioning System.

23. The method according to any one of Claims 1 to 22, in which the time Tᵢ of arrival at a node Pᵢ of the travelled distance data is recorded in addition to the geographical coordinates xᵢ, yᵢ and stored in the storage device of the mobile unit.

24. The method according to any one of Claim 1 or 23, in which the absolute time of motion Tⱼₖ is additionally assigned to the sections PⱼPₖ of the travelled distance data.

25. The method according to any one of Claims 1 to 24, in which the actual duration of motion tⱼₖ is additionally assigned to the sections PⱼPₖ of the travelled distance data.

26. The method according to Claim 25, in which geographically identical sections of different motions of the mobile unit are aggregated for predetermined time intervals of the duration of motion tⱼₖ in the section data file.

27. The method according to Claim 25 or 26, in which mean values are calculated from the durations of motion tⱼₖ.

28. The method according to any one of Claims 25 to 27, in which the frequency distribution of the durations of motion tⱼₖ for periods being identical with respect to typical traffic conditions is assigned to the section data PⱼPₖ.

29. The method according to any one of Claims 24 to 28, in which the duration of non-movement of the mobile unit is suppressed when determining the duration of motion tⱼₖ.

30. The method according to any one of Claims 24 to 29, in which the section data file contains the section data averaged with respect to the time of day, day of week, position of the day in the month, and the month itself together with the frequency distribution of the durations of motion tⱼₖ.

31. The method according to any one of Claims 24 to 30, in which the most recent section data are saved in a short term section data file that contains for a short past period the actually realized durations of motion tⱼₖ relating to the individual section data.

32. The method according to any one of Claims 1 to 31, in which the nodes Pⱼ, Pₖ of a section PⱼPₖ are determined in accordance with the occurrence of a change of direction.

33. The method according to any one of Claims 1 to 32, in which the nodes Pⱼ, Pₖ of a section PⱼPₖ are determined in such a way that they lie at the intersection of sections running in different directions.

34. The method according to any one of Claims 1 to 33, in which supplementary data such as periods of non-movement of the mobile unit etc. are stored in the section data.

35. The method according to any one of Claims 1 to 34, in which the data are determined and saved within a vehicle representing a mobile unit.

36. The method for deriving destination tracking data from the data generated in accordance with any one of Claims 1 to 35, in which a computer with knowledge of a section file is given a desired trip specified by inputting a starting point, a point of destination, and a starting or target time as well as special requirements, if any, the computer calculating a route composed of individual sections using the section file and minimizing the duration of motion or the route length taking into account any special requirements, the relevant data derived from the route determined as described above being displayed in a display unit and/or output acoustically.

37. The method in accordance with Claim 36, in which the computer, when calculating a route, makes use of the most recent section data stored in the short term section file together with the corresponding section data from the section file which does not deviate typically from the corresponding recent section data.

38. Device for carrying out the method according to any one of Claims 1 to 37 for use in at least one mobile unit, containing:
- a location sensor (4) to determine the current geographical position of the mobile unit,
- a milometer (8) to generate a route signal corresponding to the distance travelled,
- an electronic control device (2) containing a microprocessor (22), ROM (24) and RAM (26),
as well as
- a motion storage unit (40),
- a section storage unit (42),
- a section data file storage unit (44),
- means for updating a section data file by newly generated section data
- possibly, a short-term section storage unit (46),
- an input unit (28), and
- a display unit (30).

39. Device according to Claim 38, comprising a direction sensor (6) provided to determine the current geographical direction of the mobile unit.

40. Device according to Claim 38 or 39, comprising a clock (10) provided to generate time signals.

41. Device according to any one of Claims 38 to 40, in which the input unit (28) comprises a unit to read an address information as point of destination from a data carrier.

42. Device according to Claim 41, in which said read unit is a facility for reading bar-codes.

43. Device according to any one of Claims 38 to 42, comprising a transmission device (32) built into the mobile unit for transmitting collected data, possibly automatically, and a central computer (62) installed remote from the mobile unit which receives and evaluates the data transmitted by the transmission device (32) of the mobile unit and stores the evaluated data.

44. Device according to Claim 43, in which a receiving unit of the transmission device (32) receives data from a central computer (62) and an output device (30) of the mobile unit outputs the data received from a central computer (62).

45. Device according to Claims 43 or 44, in which the transmission device (32) contains an interface.

46. Device according to any one of Claims 43 to 45, in which the transmission device (32) contains a radio device.

47. Device according to any one of Claims 38 to 46, in which further means (14) are available in the mobile unit to record the time of starting and ending a motion and/or the day of the week on which the mobile unit is moved.

48. Device according to any one of Claims 38 to 47, which is particularly applicable to motor driven mobile units, in which provision is made to detect the revolutions of the motor.

49. Device according to any one of Claims 38 to 48, which is in particular applicable to motor driven mobile units, in which means are provided for detecting the energy carrier level in a tank of a mobile unit containing the energy required by the motor of the mobile unit.

50. Device according to any one of Claims 39 to 49, in which the means for detecting the direction of motion of the mobile unit comprise a gyrometer and/or a compass (6).

51. Device according to any one of Claims 38 to 50, in which a Geographical Positioning System receiver (4) is provided to detect the current absolute position of the mobile unit.

52. Device according to any one of claims 43 to 51, in which a central computer (62) is part of a stationary navigational unit which in addition to the central computer (62) contains a transmission device (64) to receive and send data from and to a mobile unit and contains at least one storage unit (68, 70, 72, 74, 76).

## Revendications

1. Procédé de génération et d'actualisation de données utilisables dans un système de guidage de destination d'au moins une unité mobile,
- dans lequel, pendant un déplacement de l'unité mobile, des données de trajectoire de déplacement sont générées, du moins à des intervalles de temps prédéfinis, et sauvegardées dans au moins un dispositif de mémoire prévu dans l'unité mobile, les données de distance de déplacement reproduisant les distances parcourues du moins ponctuellement et attribuant à chaque point Pᵢ ses coordonnées géographiques xᵢ , yᵢ, et
- dans lequel les données d'itinéraire sont générées et sauvegardées dans le dispositif de mémoire qui est prévu dans l'unité mobile, étant sélectionné pour les données d'itinéraire dans les données de distance de déplacement les points Pⱼ et Pₖ, qui définissent les sections d'itinéraire consécutives les unes aux autres PⱼPₖ, auxquelles sont associées comme données au moins leurs points géographiques initiaux et terminaux,
**caractérisé en ce qu'**à partir des données d'itinéraire est généré et sauvegardé dans le dispositif de mémoire prévu dans l'unité mobile un fichier d'itinéraire, qui est complété et/ou actualisé en continu sur la base de données d'itinéraire nouvellement générées de l'unité mobile.

2. Procédé selon la revendication 1, dans lequel, outre les coordonnées géographiques xᵢ , yᵢ des points Pᵢ des données de distance de déplacement, le sens de déplacement αᵢ de l'unité mobile est détecté pour les données d'itinéraire.

3. Procédé selon la revendication 2, dans lequel le sens de déplacement αᵢ est dérivé des coordonnées géographiques xᵢ, yᵢ, des points Pᵢ des données de distance de déplacement.

4. Procédé selon la revendication 2, dans lequel le sens de déplacement αᵢ est détecté au moyen d'au moins un dispositif de capteur prévu dans l'unité mobile.

5. Procédé selon l'une quelconque des revendications 1 à 4, dans lequel la génération de données d'itinéraire dans l'unité mobile s'interrompt lorsque les données d'itinéraire générées sont déjà disponibles comme connues dans le dispositif de mémoire de l'unité mobile, et dans lequel la génération de ces données est effectuée lorsque les données d'itinéraire générées ne sont pas encore disponibles dans le dispositif de mémoire de l'unité mobile.

6. Procédé selon l'une quelconque des revendications 1 à 5, dans lequel un dispositif de traitement des données prévu dans l'unité mobile établit sur demande, par saisie d'un point de destination et le cas échéant d'un point de départ pour l'unité mobile dans un dispositif de saisie prévu dans l'unité mobile et représente de manière optique et/ou restitue de manière acoustique dans l'unité mobile une proposition de trajet sur la base du fichier d'itinéraire déjà sauvegardé dans le dispositif de mémoire de l'unité mobile.

7. Procédé selon l'une quelconque des revendications 1 à 6, dans lequel il est prévu au moins un calculateur central disposé séparément de l'au moins une unité mobile, auquel sont transmises les fichiers d'itinéraire de plusieurs unités mobiles et qui fusionne ceux-ci les uns avec les autres, du moins à des intervalles de temps prédéterminés, en au moins un fichier global d'itinéraire.

8. Procédé selon la revendication 7, dans lequel un calculateur central définit, avant la fusion des fichiers d'itinéraire, la valeur de nouveauté d'un fichier d'itinéraire transmis par une unité mobile et ne fusionne ce fichier d'itinéraire transmis avec le fichier d'itinéraire global que si ce fichier d'itinéraire a été reconnu comme nouveau, du moins partiellement.

9. Procédé selon la revendication 7 ou 8, dans lequel est associé aux fichiers d'itinéraire donnés par les différentes unités mobiles un indicatif de classification de l'unité mobile et sont créés dans un calculateur central différents fichiers globaux d'itinéraire qui correspondent aux indicatifs.

10. Procédé selon l'une quelconque des revendications 7 à 9, dans lequel est associé aux données transmises par les unités mobiles un code d'identification pour l'unité mobile et dans lequel la valeur de nouveauté des données transmises est déterminée en même temps que le code d'identification de l'unité mobile dans un calculateur central, afin de calculer une compensation pour l'unité mobile transmettrice.

11. Procédé selon l'une quelconque des revendications 7 à 10, dans lequel la transmission du fichier d'itinéraire généré par une unité mobile à un calculateur central a lieu immédiatement à la fin d'un déplacement de l'unité mobile.

12. Procédé selon l'une quelconque des revendications 7 à 11, dans lequel la transmission du fichier d'itinéraire généré par une unité mobile à un calculateur central a lieu après une période de temps prédéfinie.

13. Procédé selon l'une quelconque des revendications 7 à 12, dans lequel un calculateur central transmet l'au moins un fichier global d'itinéraire aux unités mobiles en fonction d'un critère prédéfini.

14. Procédé selon la revendication 13, dans lequel la transmission du fichier global d'itinéraire a lieu automatiquement, de préférence après une période de temps prédéterminée, d'un calculateur central vers les unités mobiles.

15. Procédé selon la revendication 13 ou 14, dans lequel la transmission du fichier global d'itinéraire d'un calculateur central vers une unité mobile a lieu sur demande de l'unité mobile.

16. Procédé selon l'une quelconque des revendications 7 à 15, dans lequel un calculateur central, sur demande de la part d'une unité mobile, établit et transmet à l'unité mobile, par communication d'un point de destination et le cas échéant de départ pour cette unité mobile, une proposition de trajet sur la base de l'au moins un fichier global d'itinéraire déjà sauvegardé dans le calculateur central.

17. Procédé selon l'une quelconque des revendications 6 à 16, dans lequel le dispositif de traitement de données prévu dans l'unité mobile ou un calculateur central utilise, en cas de point de départ ou de destination inconnu, le point de départ et/ou de destination suivant connu issu du fichier d'itinéraire sauvegardé dans l'unité mobile ou de l'au moins un fichier global d'itinéraire sauvegardé dans le calculateur central pour faire une proposition de trajet.

18. Procédé selon l'une quelconque des revendications 6 à 17, dans lequel l'indication du point de départ, de destination et/ou d'un point situé entre le point de départ et de destination se fait sous forme de coordonnées.

19. Procédé selon la revendication 18, dans lequel les coordonnées sont représentées par un code barres.

20. Procédé selon l'une quelconque des revendications 6 à 19, dans lequel la génération des données de distance de déplacement est réalisée par l'unité mobile lorsque l'unité mobile se déplace suivant un trajet non proposé par un calculateur central ou par le dispositif de traitement de données prévu dans l'unité mobile.

21. Procédé selon l'une quelconque des revendications 1 à 20, dans lequel la génération des données de distance de déplacement s'interrompt si le déplacement s'interrompt.

22. Procédé selon l'une quelconque des revendications 1 à 21, dans lequel la détection des coordonnées absolues de l'unité mobile a lieu sur la base du système GPS.

23. Procédé selon l'une quelconque des revendications 1 à 22, dans lequel, outre les coordonnées géographiques xᵢ, yᵢ des points Pᵢ des données de distance de déplacement, les moments Tᵢ où ils sont atteints sont détectés et sauvegardés dans le dispositif de mémoire de l'unité mobile.

24. Procédé selon l'une quelconque des revendications 1 ou 23, dans lequel sont de plus associés aux sections d'itinéraire PⱼPₖ, des données d'itinéraire les temps absolus Tⱼₖ de déplacement.

25. Procédé selon l'une quelconque des revendications 1 à 24, dans lequel sont de plus associés aux sections d'itinéraire PⱼPₖ, des données d'itinéraire les durées de déplacement tⱼₖ nécessaires.

26. Procédé selon la revendication 25, dans lequel sont regroupées dans le fichier d'itinéraire les sections d'itinéraire géographiquement identiques de différents déplacements de l'unité mobile pour des fractions de temps prédéfinies de la durée de déplacement tⱼₖ.

27. Procédé selon la revendication 25 ou 26, dans lequel des valeurs moyennes sont constituées à partir des durées de déplacement tⱼₖ.

28. Procédé selon l'une quelconque des revendications 25 à 27, dans lequel est associée aux données d'itinéraire PⱼPₖ, la répartition de fréquence des durées de déplacement tⱼₖ en cas de fractions de temps égales relativement à l'incidence typique de la circulation.

29. Procédé selon l'une quelconque des revendications 24 à 28, dans lequel une durée d'immobilisation de l'unité mobile est réduite lors de la détermination de la durée de déplacement tⱼₖ.

30. Procédé selon l'une quelconque des revendications 24 à 29, dans lequel le fichier d'itinéraire contient les données de sections d'itinéraire ramenées à une moyenne au niveau de l'heure du jour, du jour de la semaine, de la situation du jour de la semaine dans le mois et du mois ainsi que la répartition de fréquence des durées de déplacement tⱼₖ.

31. Procédé selon l'une quelconque des revendications 24 à 30, dans lequel les données de sections d'itinéraire respectivement les plus actuelles sont sauvegardées dans un fichier d'itinéraire à court terme qui contient, pour un bref laps de temps passé, les durées de déplacement tⱼₖ réalisées faisant partie des données individuelles de sections d'itinéraire.

32. Procédé selon l'une quelconque des revendications 1 à 31, dans lequel les points Pⱼ, Pₖ d'un itinéraire PⱼPₖ sont fixés en fonction de la survenance de changements de direction.

33. Procédé selon l'une quelconque des revendications 1 à 32, dans lequel les points Pⱼ, Pₖ d'un itinéraire PⱼPₖ sont fixés de manière à ce qu'ils se situent aux points d'intersection d'itinéraires de directions différentes.

34. Procédé selon l'une quelconque des revendications 1 à 33, dans lequel des données supplémentaires sont sauvegardées dans les données de sections d'itinéraire, comme les temps d'immobilisation de l'unité mobile, etc.

35. Procédé selon l'une quelconque des revendications 1 à 34, dans lequel les données sont détectées et sauvegardées à l'intérieur d'un véhicule faisant office d'unité mobile.

36. Procédé de déduction de données de guidage de destination à partir des données générées à partir du procédé selon l'une quelconque des revendications 1 à 35, dans lequel est saisi dans un calculateur, en connaissance d'un fichier d'itinéraire, un souhait de déplacement avec un point initial, un point terminal et un temps de départ ou d'arrivée ainsi que le cas échéant un voeu spécial, dans lequel le calculateur calcule, à partir du fichier d'itinéraire, un parcours composé de sections d'itinéraire individuelles en minimisant la durée de déplacement ou la longueur du parcours et/ou le cas échéant en tenant compte de voeux spéciaux et, à partir du parcours ainsi déterminé, des données corrélatives dérivées sont représentées sur une unité d'affichage et/ou restituées de manière acoustique.

37. Procédé selon la revendication 36, dans lequel le calculateur, lors du calcul d'un parcours, tient compte des données de sections d'itinéraire respectivement les plus actuelles issues d'un fichier d'itinéraire à court terme ainsi que des données de sections d'itinéraire correspondantes issues du fichier d'itinéraire, pour lesquelles il n'y a pas d'écarts atypiques par rapport aux données de sections d'itinéraire actuelles correspondantes.

38. Dispositif de réalisation du procédé selon l'une quelconque des revendications 1 à 37 destiné à un usage dans au moins une unité mobile, comportant :
- un capteur de position (4) servant à déterminer la position géographique momentanée de l'unité mobile,
- un indicateur de parcours (8) servant à générer un signal de parcours correspondant à une distance parcourue,
- un appareil de commande électronique (2) comportant un microprocesseur (22) à mémoire ROM (24) et RAM (26),
ainsi
- qu'une mémoire de déplacement (40),
- une mémoire d'itinéraire (42),
- une mémoire de fichier d'itinéraire (44),
- des moyens d'actualisation des fichiers d'itinéraire sur la base de données d'itinéraire nouvellement générées,
- le cas échéant, une mémoire d'itinéraire à court terme (46),
- une unité de saisie (28) et
- une unité d'affichage (30).

39. Dispositif selon la revendication 38, dans lequel un capteur de direction (6) est prévu pour la détermination de la direction géographique momentanée de l'unité mobile.

40. Dispositif selon la revendication 38 ou 39, dans lequel une horloge (10) est prévue pour générer un signal temporel.

41. Dispositif selon l'une quelconque des revendications 38 à 40, dans lequel l'unité de saisie (28) comporte un dispositif de consultation d'informations d'adresses se trouvant sur un support de données comme point de destination.

42. Dispositif selon la revendication 41, dans lequel le dispositif est un dispositif de lecture à code barres.

43. Dispositif selon l'une quelconque des revendications 38 à 42, dans lequel un dispositif de transmission (32) disposé dans l'unité mobile pour l'éventuelle transmission automatique des données détectées et un calculateur central (62) disposé séparément de l'unité mobile reçoit et exploite les données transmises par le dispositif de transmission (32) de l'unité mobile et sauvegarde l'exploitation faite.

44. Dispositif selon la revendication 43, dans lequel une unité de réception disposée dans le dispositif de transmission (32) reçoit les données d'un calculateur central (62), et dans lequel se trouve un dispositif d'édition (30) disposé dans l'unité mobile pour l'édition des données reçues par un calculateur central (62).

45. Dispositif selon la revendication 43 ou 44, dans lequel le dispositif de transmission (32) présente une interface.

46. Dispositif selon l'une quelconque des revendications 43 à 45, dans lequel le dispositif de transmission (32) présente un dispositif radio.

47. Dispositif selon l'une quelconque des revendications 38 à 46, dans lequel sont de plus prévus dans l'unité mobile des moyens (14) de détection de l'heure du jour de début et de fin du déplacement et/ou du jour de la semaine de déplacement de l'unité mobile.

48. Dispositif selon l'une quelconque des revendications 38 à 47, qui est utilisable notamment dans une unité mobile fonctionnant avec un moteur, dans lequel des moyens de détection du régime du moteur sont prévus.

49. Dispositif selon l'une quelconque des revendications 38 à 48, qui est utilisable notamment dans une unité mobile fonctionnant avec un moteur, dans lequel des moyens de détection du niveau de remplissage d'une unité d'accumulation pour l'énergie nécessaire à la propulsion du moteur disposée dans l'unité mobile sont prévus.

50. Dispositif selon l'une quelconque des revendications 39 à 49, dans lequel les moyens de détection du sens de déplacement de l'unité mobile présentent un gyromètre et/ou une boussole (6).

51. Dispositif selon l'une quelconque des revendications 38 à 50, dans lequel les moyens de détection de la position absolue relative de l'unité mobile présentent un récepteur GPS (4).

52. Dispositif selon l'une quelconque des revendications 43 à 51, dans lequel un calculateur central (62) fait partie d'un agrégat de navigation stationnaire qui, outre le calculateur central (62), présente un dispositif de transmission (64) pour la réception de données de l'unité mobile ainsi que pour l'envoi de données à l'unité mobile et au moins une mémoire (68, 70, 72, 74, 76).
